(19) **Europäisches Patentamt**

**European Patent Office**

**Office européen des brevets**

(11) **EP 1 710 077 A1**

(12) **EUROPEAN PATENT APPLICATION**
published in accordance with Art. 158(3) EPC

(43) Date of publication:
**11.10.2006 Bulletin 2006/41**

(51) Int Cl.:
*B32B 27/00* (2006.01)   *B41M 5/00* (2006.01)
*D06Q 1/12* (2006.01)   *G09F 3/02* (2006.01)

(21) Application number: **05703517.2**

(22) Date of filing: **13.01.2005**

(86) International application number:
**PCT/JP2005/000278**

(87) International publication number:
**WO 2005/072956 (11.08.2005 Gazette 2005/32)**

(84) Designated Contracting States:
**DE GB IT SE**

(30) Priority: **13.01.2004  JP 2004006145**
**13.01.2004  JP 2004006146**
**13.01.2004  JP 2004006147**
**10.05.2004  JP 2004140201**

(71) Applicant: **DAICEL CHEMICAL INDUSTRIES, LTD.**
**Sakai-shi, Osaka 590-8501 (JP)**

(72) Inventors:
• **SUMITA, Katsuhiko**
  **Himeji-shi, Hyogo 6711212 (JP)**
• **NAKAMURA, Shuji**
  **Amagasaki-shi, Hyogo 6600802 (JP)**

(74) Representative: **Grünecker, Kinkeldey,**
**Stockmair & Schwanhäusser**
**Anwaltssozietät**
**Maximilianstrasse 58**
**80538 München (DE)**

(54) **TRANSFER SHEET**

(57)    In a transfer sheet which comprises a support and a transfer layer releasable from the support, the transfer layer comprises (i) an adhesive layer formed on one surface of the support and (ii) a masking layer formed on the adhesive layer and containing a masking agent and a binder resin which may have a crosslinking group, and the transfer layer is adjusted to have an elongation at break of not less than 30% (e.g., 30 to 200%). The masking layer may comprise a white pigment such as a titanium oxide and a urethane-series resin which may have an isocyanate group. The transfer sheet may comprise an image-receiving layer at least containing a urethane-series resin particle formed on the masking layer. Moreover, the transfer sheet may comprise an anchor layer between the masking layer and the image-receiving layer. The transfer layer is capable of recording an image thereon the image being transferred from a recording sheet. These transfer sheets may be used for forming the image on a colored object by transferring to the object.

**Description**

TECHNICAL FIELD

The present invention relates to a transfer sheet suitable for forming a transfer image on an object (for example, a deep-colored object) such as clothes by forming a record image and transferring the record image to the object, and a method for forming a record image.

BACKGROUND ART

A variety of printing methods (e.g., mainly a screen printing) are applied for printing a surface of a fabric such as a T-shirt, a ceramic (pottery), or a plastic product with a logo (mark) or image. However, these printing methods require producing an expensive original (negative) plate. Accordingly, printing a small number of copies is not only inappropriate in view of cost but also difficult to perform rapidly because of a long time necessary for producing the original plate. In order to dissolve these problems, recently, there has been known a method which comprises recording an image onto a transfer sheet having a supporting layer and a transfer layer in advance with an ink jet printer or a color copying machine, and thermally-transferring the record image of the transfer sheet to an object (object to be transferred) such as clothes. It is required for a transfer sheet used in such a method that a sharp or clear image should be formed regardless of the kind of the object. For example, formation of a sharp or clear image even on a deep-colored object is required.

For example, Japanese Patent Application Laid-Open No. 232936/2001 (JP-2001-232936A, Patent Document 1) discloses a transfer sheet for an ink-jet printer, in which the sheet comprises a support and a transfer layer releasable from the support and containing a hot-melt adhesive particle, wherein the hot-melt adhesive particle has an oil absorption of not less than 50 mL/100 g, and includes a first hot-melt adhesive particle being porous. However, in the event that a record image is formed on a colored object (in particular, an object having a deep color or low brightness such as blue or black) with this sheet, the record image becomes unclear.

Japanese Patent Application Laid-Open No. 248875/2002 (JP-2002-248875A, Patent Document 2) discloses a transfer sheet which comprises a support and a transfer layer releasable from the support, wherein the transfer layer at least contains a hot-melt adhesive resin and a masking agent. The document describes a transfer sheet as an obverse image-mode (positive-mode) transfer sheet which comprises a support and a transfer layer releasable from the support, wherein the transfer layer comprises (i) an adhesive layer containing at least a hot-melt adhesive resin and (ii) an image-receiving layer formed on the adhesive layer and containing a binder resin and a dye fixing agent, and at least one layer of the adhesive layer and the image-receiving layer comprises a white masking agent. The sheet, however, is deteriorated in masking property with the white masking agent. Further, in the case of increasing the amount of the masking agent for enhancing the masking property of the sheet, the mechanical property such as elongation or strength of the sheet has become lowered. Such a sheet is insufficient in handleability as a transfer sheet. Further, an object with a transferred image formed thereon also lacks in a texture (softness).

[Patent Document 1] JP-2001-232936A (Claim 1)
[Patent Document 2] JP-2002-248875A (Claims 1 and 14, Paragraph Nos. [0079] and [0088])

DISCLOSURE OF THE INVENTION

PROBLEMS TO BE SOLVED BY THE INVENTION

It is therefore an object of the present invention to provide a transfer sheet having a high masking property as well as excellent mechanical properties such as elongation and strength; and a method for forming a record image.

It is another object of the present invention to provide a transfer sheet capable of forming a sharp or clear record image on a deep-colored or low brightness-colored object and capable of making a texture (softness) of a heat-transferred object excellent, as well as being good in handleability; and a method for forming a record image.

It is still another object of the present invention to provide a transfer sheet having a high ink-absorbability and ink-fixability, being excellent in durabilities such as water resistance and washing resistance, as well as having high stability of the transfer layer in which particles are not fallen or dropped; and a method for forming a record image with the use of the sheet.

It is a further object of the present invention to provide a transfer sheet capable of forming a sharp or clear image on an object regardless of a shape or material of the object; and a method for forming a record image with the use of the sheet.

MEANS TO SOLVE THE PROBLEMS

The inventors of the present invention made intensive studies to achieve the above objects and finally found that by using a transfer layer comprising a specific adhesive layer and a masking layer as well as having an elongation at break of not less than 30%, a transfer sheet comprising the transfer layer has a high masking property as well as is excellent in mechanical properties such as elongation and strength. The present invention was accomplished based on the above findings.

That is , the transfer sheet of the present invention is a transfer sheet which comprises a support (substrate) and a transfer layer releasable (separable or peelable) from the support, wherein the transfer layer comprises (i) an adhesive layer formed on one surface of the support and (ii) a masking layer formed on the adhesive layer and containing a masking agent (covering agent or veiling agent) and a binder resin which may have a crosslinking group, and the elongation at break (breaking elongation) of the transfer layer is not less than 30%. The elongation of the transfer layer at break may be, for example, about 30 to 200%. The masking layer may comprise a white pigment [e.g., a titanium oxide having an average particle size of not more than 3 $\mu$m (e.g., about 0.05 to 2 $\mu$m)] and a urethane-series resin which may have an isocyanate group. In the masking layer, the proportion (weight ratio) of the masking agent relative to the binder resin [the masking agent/the binder resin] may be about 30/70 to 90/10 (particularly about 35/65 to 80/20). The transfer sheet may have a whiteness degree (L value) of not less than 88 when measured from the masking layer side. The adhesive layer may comprise a hot-melt adhesive resin such as a urethane-seriesresin (e.g., a urethane-series resin having a softening point of 70 to 180°C), a polyamide-series resin, or an olefinic resin (e.g., an olefinic resin having a melting point of 70 to 120°C). In particular, the adhesive layer may comprise a urethane-series resin having a softening point of 70 to 120°C in combination with a urethane-series resin having a softening point of over 120°C and not higher than 180°C. In the transfer sheet, each layer of the adhesive layer and the masking layer may contain at leas t (as a minimum) a urethane-series resin. In the transfer sheet, the transfer layer may further comprise an image-receiving layer formed on the masking layer. The image-receiving layer, for example, may comprise a soft resin such as a vinyl chloride-series resin, a polyester-series resin, or a urethane-series resin. Moreover, the image-receiving layer may comprise at least (as a minimum) a urethane-series resin particle (e.g., a urethane resin particle, and a polyurethane-urea resin particle), and may further comprise a hot-melt adhesive particle (e.g., a polyamide-series resin particle). In the image-receiving layer containing such a resin particle, the image-receiving layer may be formed (fabricated) at a predetermined heating temperature, the urethane-series resin particle may have a softening point over the heating temperature, and the hot-melt adhesive particle may have a melting point of not higher than the heating temperature. Further, the image-receiving layer containing the resin particle may comprise at least a porous resin particle. The image-receiving layer containing such a resin particle (porous resin particle) may further contain a binder resin and a dye fixing agent (particularly, an aliphatic dye fixing agent). In the image-receiving layer, relative to 100 parts by weight of the binder resin, the proportion of the urethane-series resin particle may be about 10 to 10000 parts by weight, that of the hot-melt adhesive particle may be about 10 to 10000 parts by weight, and that of the dye fixing agent may be about 1 to 200 parts by weight. The transfer layer comprising the image-receiving layer which contains such a resin particle is suitable (or useful) for forming an image with an ink jet recording system. In the sheet comprising the image-receiving layer, each of the adhesive layer, the masking layer and the image-receiving layer may also contain at least the same series resin (particularly a urethane-series resin). In the transfer sheet, the transfer layer may comprise an anchor layer (formed) between the masking layer and the image-receiving layer. The anchor layer may comprise a cationic resin (particularly a cationic urethane-series resin). In the transfer sheet, the transfer layer is capable of recording an image thereon, the image being transferred from a recording sheet. In the transfer sheet, the surface of the transfer layer may have releasability (releasing property) to a record sheet. Moreover, the record sheet may have a sublimative or thermofusibly-transferred image recorded thereon. These transfer sheets may be used for forming an image on a colored object by transferring.

The present invention also includes a transfer image-forming set comprising the transfer sheet and a record sheet onto which an image has been formed.

Moreover, the present invention also encompasses a process for producing the transfer sheet which comprises forming an adhesive layer separable from a support on one surface of the support, and forming a masking layer on the adhesive layer.

Further, the present invention also includes a method for forming an image on an object, which comprises a step for releasing a support from the transfer sheet to give a transfer layer, and a step for transferring the transfer layer to the object with bringing the adhesive layer into contact with the object, wherein the image is formed on the object by recording the image on the transfer layer.

EFFECTS OF THE INVENTION

In the present invention, since the transfer layer comprises a combination of the specific adhesive layer and a masking layer, and has an elongation at break adjusted into a certain (specific) range, a transfer sheet having a high masking property and excellent mechanical properties such as elongation and strength is obtained. The sheet ensures to form a record image sharply or clearly on a deep-colored or low brightness-colored object, and excels in handleability as a transfer sheet, and further the thermally-transferred object is excellent in a texture (softness). In particular, formation of an image-receiving layer containing a urethane-series resin particle realizes a transfer sheet which has a high ink-absorbability and ink-fixability and excels in durabilities such as water resistance and washing resistance, as well as has high stability of the transfer layer without particle-falling or dropping (or flaking). Further, a sharp or clear image can be formed to an object regardless of a shape or material of the object.

DETAILED DESCRIPTION OF THE INVENTION

The transfer sheet of the present invention comprises a support and a transfer layer releasable from the support.

[Support]

As a support (or a substrate), any of supports such as opaque, semitransparent and transparent supports can be used as far as the adhesive layer is capable of separating from the support. Examples of the support usually include a release (releasable) support, for example, a release-treated paper (a release paper), a synthetic paper, a chemical (artificial) fiber paper and a plastic film, and each may be treated for providing releasing property (releasability).

As a paper constituting the release-treated paper (a release paper), there may be mentioned a paper (a paper for printing, a package (or wrapping) paper, a thin paper, etc.). The paper may be subjected to a variety of processing such as lamination or surface-coating by a polypropylene, a polystyrene and the like.

As the synthetic paper, there may be mentioned, a variety of synthetic papers such as a paper made with a polypropylene and a polystyrene.

As the chemical fiber paper, there may be mentioned, a variety of chemical fiber papers made with a chemical fiber such as a polyamide fiber, an acrylic fiber, a polyester fiber and a polypropylene fiber.

As a polymer constituting the plastic film, a variety of resins (a thermoplastic resin and a thermosetting resin) can be used, and a thermoplastic resin is usually employed. As the thermoplastic resin, there may be mentioned a polyolefinic resin (e.g., a $polyC_{2-4}$olefinic resin such as a polypropylene), a cellulose derivative (e.g., a cellulose ester such as a cellulose acetate), a polyester-series resin (e.g., a polyalkylene terephthalate such as a polyethylene terephthalate or a polybutylene terephthalate, a polyalkylene naphthalate such as a polyethylene naphthalate or a polybutylene naphthalate, or a copolyester thereof), a polyamide-series resin (e.g., a polyamide 6, and a polyamide 6/6), a vinyl alcohol-series resin (e.g., a polyvinyl alcohol, and an ethylene-vinyl alcohol copolymer), and the like. Among these films, the olefinic resin, the polyester-series resin, the polyamide-series resin or the like is usually employed. In particular, the polyester-series resin (especially, a polyethylene terephthalate) is preferred from viewpoints of mechanical strength, heat resistance and workability.

The thickness of the support can be selected according to its use or application, and is usually, for example, about 10 to 250 $\mu$m, and preferably about 15 to 200 $\mu$m, and more preferably about 20 to 150 $\mu$m.

The releasability can be provided or imparted by a conventional method, for example, by allowing the support to be treated with a releasing agent (e.g., a wax, a salt of a higher fatty acid, an ester of a higher fatty acid, an amide of a higher fatty acid, and a silicone oil) or by allowing the support to contain the releasing agent. In the case of the paper, for example, the releasability can be imparted by coating the paper with a releasing agent (e.g., a silicone oil) after anchor treatment (e.g., clay-coat). If necessary, to the plastic film may be added a conventional additive such as a stabilizer (e.g., an antioxidant, an ultraviolet ray absorber, and a thermal stabilizer), a lubricant, a nucleation agent, a filler or a pigment.

[Transfer layer]

The transfer layer comprises (i) an adhesive layer formed on at least one surface of the support (particularly, on one surface of the support) and (ii) a masking layer formed on the adhesive layer and containing a masking agent (covering agent or veiling agent) and a binder resin which may have a crosslinking group. The transfer layer may further comprise an image-receiving layer on the masking layer. Furthermore, the transfer layer may further comprise an anchor layer to be formed (interposed) between the masking layer and the image-receiving layer.

(Adhesive layer)

The adhesive layer is releasable from the support and comprises at least a hot-melt adhesive resin. The hot-melt adhesive resin is not particularly limited to a specific one as far as having a thermal-adhesiveness. For example, the hot-melt adhesive resin may include a polyamide-series resin, a polyester-series resin, an olefinic resin, a urethane-series resin, an acrylic resin, a rubber, and others. These hot-melt adhesive resins may be used singly or in combination. The hot-melt adhesive resin is usually water-insoluble. The hot-melt adhesive resin may be a reactive hot-melt adhesive resin having a reactive group (e.g., a carboxyl group, a hydroxyl group, an amino group, an isocyanate group, and a silyl group) at a terminal thereof. Among these hot-melt adhesive resins, in view of imparting a thermal transferability and a durability (e.g., washing resistance), a urethane-series resin, a polyamide-series resin, a polyester-series resin, and an olefinic resin are preferred.

(1) Urethane-series resin

The thermal-adhesive urethane-series resin may include, for example, a thermoplastic urethane-series resin or thermoplastic elastomer which is a reaction product of a diisocyanate component with a diol component. The urethane-series resin may be formed by using a diamine component as a chain-extending agent or a crosslinking agent, depending on needs.

Examples of the diisocyanate component may include an aromatic diisocyanate (e.g., phenylene diisocyanate, tolylene diisocyanate, diphyenlymethane-4,4'-diisocyanate, toluidine diisocyanate, diphenyl ether diisocyanate, and naphthalene diisocyanate), an araliphatic diisocyanate (e.g. , xylylene diisocyanate), an alicyclic diisocyanate (e.g., isophorone diisocyanate), an aliphatic diisocyanate (e.g., propylene diisocyanate, trimethylene diisocyanate, butylene diisocyanate,pentamethylenediisocyanate,tetramethylene diisocyanate, hexamethylene diisocyanate, trimethylhexamethylene diisocyanate, and lysine diisocyanate), and the like. The diisocyanate components may be used singly or in combination. The diisocyanate component may be an adduct, or may be used, if necessary, in combination with a polyisocyanate component such as triphenylmethane triisocyanate.

As the diol component, there may be mentioned, for example, a low molecular weight diol such as an aliphatic diol (e.g., a $C_{2-10}$alkanediol such as ethylene glycol, trimethylene glycol, propylene glycol, 1,3-butanediol, 1,4-butanediol, hexamethylene glycol, or neopentyl glycol), an alicyclic diol (e.g., hydrogenated bisphenol A, hydrogenated xylylene glycol, cyclohexanediol, and cyclohexanedimethanol), or an aromatic diol (e.g., bisphenol A, catechol, resorcin, hydroquinone, and xylylene glycol), a polyether diol (e.g., a polyoxy$C_{2-4}$alkylene glycol such as diethylene glycol, triethylene glycol, or a polytetramethylene ether glycol), a polyester diol [e.g., a reaction product of the diol component or a polyether diol with a dicarboxylic acid or a reactive derivative thereof (e.g. , a lower alkyl ester, and an acid anhydride), and a derivative from a lactone], a polycarbonatediol [e.g., a reaction product of the low molecular weight diol with a dialkyl carbonate (e.g., a di$C_{1-6}$alkyl carbonate such as dimethyl carbonate)], and the like.

In the polyester diol, as examples of the dicarboxylic acid, there may be mentioned an aliphatic dicarboxylic acid (e.g. , a $C_{4-14}$aliphatic dicarboxylic acid such as adipic acid, suberic acid, azelaic acid, sebacic acid, and dodecanedicarboxylic acid), an alicyclic dicarboxylic acid, an aromatic dicarboxylic acid (e.g., phthalic acid, terephthalic acid, and isophthalic acid), and the like. These dicarboxylic acids may be used singly or in combination. If necessary, a polycarboxylic acid such as trimellitic acid may be used in combination with the dicarboxylic acid. As examples of the lactone, there may be mentioned butyrolactone, valerolactone, caprolactone, laurolactone, and others. These lactones may be used singly or in combination.

These diol components may be used singly or in combination. The diol component may be used, if necessary, with a polyol such as trimethylolpropane and pentaerythritol in combination.

If necessary, the urethane-series resin may be crosslinked or modified with a chain-extending agent or crosslinking agent such as a polyamine compound. For example, the urethane-series resin may include a polyurethane-urea resin which is modified with the polyamine compound, or a thermoplastic elastomer which is obtained from the urethane resin and the polyamine compound as a chain-extending agent. Examples of the thermoplastic urethane-series elastomer may include an elastomer having an aliphatic polyether or polyester unit as a soft segment and a polyurethane unit of a short chain glycol as a hard segment.

As the polyamine compound, for example, there may be used a hydrazine, an aliphatic diamine (e.g., ethylenediamine, trimethylenediamine, tetramethylenediamine, hexamethylenediamine, trimethylhexamethylenediamine, and octamethylenediamine), an aromatic diamine (e.g., phenylenediamine, xylylenediamine, and diphenylmethanediamine), an alicyclic diamine [e.g., hydrogenated xylylenediamine, bis(4-aminocyclohexyl) methane, and isophoronediamine], and others. These polyamine compounds may be used singly or in combination.

These urethane-series resins may be used singly or in combination.

The urethane-series resin may include a urethane resin such as a polyester type (based) urethane-series resin, a polycarbonate type urethane-series resin, or a polyether type urethane-series resin; apolyurethane-urearesin; and the like. Among these urethane-series resins, particularly in view of little yellowing, a polyester type urethane-series resin and a polycarbonate type urethane-series resin are preferred. In particular, an aliphatic polyester type urethane-series resin, an aliphatic polycarbonate type urethane-series resin, or a combination thereof is preferred.

Further, from the viewpoint of flexibility, the preferred urethane-series resin includes a polyester type urethane-series resin obtained by using a diol component containing an aliphatic polyester diol of not less than 50% by weight (e.g., not less than 75% by weight) therein (e.g., a urethane resin which is a reaction product of a diisocyanate such as isophorone diisocyanate with a polyester diol obtainable by a reaction of a $C_{2-6}$alkanediol such as 1,4-butanediol, with a $C_{4-12}$aliphatic dicarboxylic acid such as adipic acid, and isophthalic acid or phthalic acid, or a polyester diol derived from the lactone), a polyurethane-urea resin corresponding to these polyester type urethane-series resins.

Among them, from the aspect of realizing a high elongation with a small tensile strength, the urethane-series resin (e.g., a polyester type urethane-series resin, and a polycarbonate type urethane-series resin) is particularly preferred.

The urethane-series resin may be used as an organic solvent solution, an aqueous solution or an aqueous emulsion. The aqueous solution or aqueous emulsion of the urethane-series resin may be prepared by dissolving or emulsifying and distributing the urethane-series resin with an emulsifier, or may be prepared by introducing an ionic functional group such as a free carboxyl group or a tertiary amino group into the urethane-series resin molecule, followed by dissolving or dispersing the resulting urethane-series resin with an alkali or an acid. Such a urethane-series resin having a free carboxyl group or a tertiary amino group introduced into a molecule thereof, comprises a urethane-series resin obtainable by a reaction of a diisocyanate component with a diol (particularly polymer diol) component having a free carboxyl group or a tertiary amino group. Incidentally, the diol (particularly a polymer diol) having a free carboxyl group, for example, may be obtained as a reaction product of a diol component with a polycarboxylic acid having not less than three carboxyl groups or an acid anhydride thereof (e.g., a tetrabasic acid anhydride such as a pyromellitic anhydride), or with a polycarboxylic acid having a sulfonic acid group (e.g. , sulfoisophthalic acid); or as a reaction product of ring-opening reaction of a lactone with dimethylolpropionic acid as an initiator.

(2) Polyamide-series resin

As the polyamide-series hot-melt adhesive resin, there may include a polyamide 6, a polyamide 46 , a polyamide 66, a polyamide 610, a polyamide 612, a polyamide 11, a polyamide 12, a polyamide resin generated from a reaction of a dimer acid and a diamine, a polyamide-series elastomer (e.g., a polyamide using a polyoxyalkylene diamine as a soft segment), and others. These polyamide-series resins may be used singly or in combination. Among them, the preferred polyamide-series resins include a polyamide having at least one unit selected from a constitutional unit of a polyamide 11 and a constitutional unit of a polyamide 12 (e.g., a homopolyamide such as a polyamide 11 or a polyamide 12, and a copolyamide such as a polyamide 6/11, a polyamide 6/12, a polyamide 66/12, or a copolymer of a dimer acid, a diamine, and laurolactam or aminoundecanoic acid), and a polyamide resin generated from a reaction of a dimer acid and a diamine.

(3) Olefinic resin

The thermal-adhesive olefinic resin may include, for example, a homopolymer or copolymer of an $\alpha$-olefin such as ethylene, propylene, 1-butene, 3-methyl-1-pentene, 4-methyl-1-pentene, 4-methyl-1-butene, 1-hexene, or 1-octene (in particular, an $\alpha$-$C_{2-10}$ olefin), and an olefinic elastomer.

Exemplified as the homopolymer or copolymer of the $\alpha$-olefin may include a polyolefin (e.g., a polyethylene such as a low-density polyethylene and a linear low-density polyethylene, an ethylene-propylene copolymer, and an atactic polypropylene), a modified polyolefin [an ethylene-butene-1 copolymer, an ethylene-(4-methylpentene-1)copolymer, an ethylene-vinyl acetate copolymer, an ethylene-(meth)acrylic acid copolymer or an ionomer thereof, an ethylene - (meth) acrylate copolymer such as an ethylene-ethyl acrylate copolymer, a propylene-butene-1 copolymer, an ethylene-propylene-butene-1 copolymer, and a maleic anhydride graft polypropylene], and the like. The olefinic elastomer may include an elastomer comprising a polyethylene or a polypropylene as a hard segment and an ethylene-propylene rubber (EPR) or an ethylene-propylene diene rubber (EPDM) as a soft segment.

These olefinic resins may be used singly or in combination. Among these olefinic resins, a modified polyolefin, particularly a modified ethylenic resin (e.g. , an ethylenic copolymer such as an ethylene-vinyl acetate copolymer or an ethylene-ethyl acrylate copolymer) is preferred from the viewpoint of thermal-adhesiveness.

(4) Polyester-series resin

The thermal-adhesive polyester-series resin may include a homopolyester resin, a copolyester resin and a polyester-series elastomer, which employ at least an aliphatic diol or an aliphatic dicarboxylic acid.

The homopolyester resin may include, for example, a saturated aliphatic polyester resin formed by reacting an aliphatic diol (e.g., a $C_{2-10}$alkanediol and a polyoxy$C_{2-4}$alkylene glycol which are described in the paragraph of the urethane-series resin), an aliphatic dicarboxylic acid (e.g., the above-mentioned $C_{4-14}$aliphatic dicarboxylic acid), and if necessary, a lactone.

The copolyester resin may include a saturated polyester resin obtained by substituting a part of components (a diol and/or terephthalic acid) constituting a polyethylene terephthalate or a polybutylene terephthalate with other diols (e.g., a $C_{2-6}$alkylene glycol such as ethylene glycol, propylene glycol, or 1,4-butanediol; a polyoxyalkylene glycol such as diethylene glycol or triethylene glycol; and cyclohexanedimethanol) or a dicarboxylic acid (e.g., the above aliphatic dicarboxylic acid, and an asymmetric aromatic dicarboxylic acid such as phthalic acid or isophthalic acid), or a lactone (e.g., butyrolactone, valerolactone, caprolactone, and laurolactone).

The polyester-series elastomer may include an elastomer having a $C_{2-4}$alkylene arylate (e.g., ethylene terephthalate, and butylene terephthalate) as a hard segment and a (poly)oxyalkylene glycol as a soft segment and the like.

As the polyester-series resin, there maybe employed a polyester resin having a urethane bond, for example, a resin in which a molecular weight thereof is increased with the use of the diisocyanate.

These polyester-series resins may be used singly or in combination.

The hot-melt adhesive resin may be used singly or in combination. The hot-melt adhesive resin is usually water-insoluble. The hot-melt adhesive resin may be a reactive hot-melt adhesive resin having a reactive group (e.g., a carboxyl group, a hydroxyl group, an amino group, an isocyanate group, and a silyl group) at a terminal position thereof.

The melting point (or softening point) of these hot-melt adhesive resins is, for example, about 70 to 180°C, preferably about 80 to 170°C, and more preferably about 90 to 160°C (particularly about 90 to 150°C). In particular, from the viewpoint of sufficient adhesiveness to an object or masking layer as well as prevention of the object such as a fabric from permeation of the resin, it is preferred to combine a plurality of resins having different melting points. For example, a resin having a melting point of about 70 to 120°C (e.g., about 80 to 110°C) may be used in combination with a resin having a melting point of higher than (over) 120°C and not higher than 180°C (e.g., about 130 to 160°C). Incidentally, in the present invention, the softening point means a temperature at which a resin starts flowing by heat.

The melting point of the hot-melt adhesive resin may be selected from the range of about 50 to 250°C, for example, may be about 60 to 200°C, preferably about 70 to 150°C, and more preferably about 70 to 130°C (particularly about 80 to 120°C).

Among these hot-melt adhesive resins, in the case where the object is a fabric such as clothes, in terms of adhesiveness, flexibility and texture (softness), the preferred resin includes a urethane-series resin (e.g., a urethane-series resin having a softening point (or a melting point) of 70 to 180°C), a polyamide-series resin (e.g., a polyamide-series resin having a melting point of 70 to 180°C), an olefinic resin [e.g., an olefinic resin (particularly an ethylene copolymer) having a melting point of 70 to 120°C]. In particular, a urethane-series resin (e.g., a polyester type urethane-series resin having a softening point of 70 to 180°C) is particularly preferred. Above all, it is preferred that a resin component constituting the adhesive layer comprises a urethane-series resin having a softening point of 70 to 180°C and/or an ethylene-series (ethylenic) resin having a melting point of 70 to 120°C in a proportion of not less than 50% by weight, preferably not less than 60% by weight, and more preferably not less than 70% by weight in the resin component.

The adhesive layer may contain, depending on needs, a variety of additives, for example, a stabilizer (e.g., an antioxidant, an ultraviolet ray absorber and a heat stabilizer), an antistatic agent, a flame retardant, a lubricant, an antiblocking agent, a filler, a coloring agent, an antifoaming agent, a coatability improvable (improving) agent, and a thickener.

The thickness of the adhesive layer is, for example, about 5 to 300 $\mu$m, preferably about 10 to 200 $\mu$m, and more preferably about 20 to 100 $\mu$m (particularly about 20 to 60 $\mu$m).

(Masking layer)

The masking layer (e.g., a white masking layer) comprises a masking agent (covering agent or veiling agent) and a binder resin which may have a crosslinking group. The masking layer may further contain a crosslinking agent.

(1) Masking agent

The masking agent (or a masking-improvable or improving agent) may be capable of masking an object by whitening. As the masking agent, there may be mentioned a white masking agent such as a white pigment, or a microcapsule capable of whitening by heat expansion. These masking agents may be used singly or in combination.

The white pigment is not limited to a pigment which comprises a white pigment singly, and may comprise a resin particle containing a white pigment (e.g., a particle coated with a binder resin, a binder resin particle having a plurality of white pigments dispersed therein).

As the white pigment, there may be exemplified a titanium-series (titanium-containing) white pigment [e.g., a titanium oxide (white titanium pigment)], a zinc-series (zinc-containing) white pigment (e.g., a zinc oxide, and a zinc sulfide), a composite white pigment (e.g., a lithopone), an extender [e.g., a magnesium silicate, a magnesium oxide, a calcium carbonate, a barium sulfate, an aluminum-series (aluminum-containing) extender (e.g., an alumina, an aluminum hydroxide, and an aluminum silicate), a silica, a mica, and a bentonite], and the like. Among the white pigments, the titanium-series white pigment, particularly the titanium oxide, is preferred.

The titanium oxide may have a crystal morphology or configuration of an anatase-type (or mode). From the viewpoint of having large refractive property and excellent masking property, a rutile-type (or mode) is preferred.

The average particle size of the white pigment is preferably not larger than 3 $\mu$m, for example, about 0.01 to 3 $\mu$m, preferably about 0.05 to 2 $\mu$m (e.g., about 0.05 to 1 $\mu$m), and more preferably about 0.1 to 1 $\mu$m (e.g., about 0.1 to 0. 5 $\mu$m). In the case where the average particle size of the white pigment is too small, white masking property is not sufficiently exerted. In the case where the average particle size of the white pigment is too large, texture or adhesiveness is deteriorated.

The microcapsule contains a low-boiling solvent as a core material which vaporizes by heating in thermally-transferring. The boiling point of the solvent as the core material is not more than 200°C, preferably about 50 to 180°C , and more preferably about 50 to 150°C. Preferred as such a solvent is, for example, an aliphatic hydrocarbon (e.g., pentane, hexane), an alicyclic hydrocarbon (e.g., cyclohexane), an aromatic hydrocarbon (e.g., toluene, and xylene), an ether(e.g.,1,4-dioxane,and tetrahydrofuran), an ester (e.g., methyl acetate, and ethyl acetate), a ketone (e.g., acetone, and methyl ethyl ketone), an alcohol (e.g., methanol, ethanol, and isopropanol), and particularly a hydrocarbon-series solvent (e.g., hexane).

As a wall material constituting the microcapsule, there may be mentioned a thermoplastic resin, which has high gas barrier property and is softened by heating upon thermally-transferring. For example, such a wall material may include a vinylidene chloride-series polymer [e.g., a vinylidene chloride-acrylonitrile copolymer, a vinylidene chloride-(meth)acrylic acid copolymer, a vinylidene chloride-(meth)acrylate copolymer, and a vinylidene chloride-vinyl acetate copolymer], a polyacrylonitrile-series polymer, a vinyl alcohol-series polymer (e.g., a polyvinyl alcohol, and an ethylene-vinyl alcohol copolymer), a polyamide-series resin (e.g., a polyamide 6, a polyamide 66, a polyamide 610, a polyamide 11, and a polyamide 12), and others.

The average particle size of the microcapsule is preferably not larger than 50 $\mu$m, and for example, is about 0.1 to 50 $\mu$m, preferably about 0.5 t0 20 $\mu$m, and more preferably about 1 to 10 $\mu$m.

It is preferred that the microcapsule expands not less than three times (e.g., about 5 to 1000 times, preferably about 10 to 100 times, and more preferably about 10 to 50 times) by volume in the case of heating at 150°C for one minute.

These masking agents may be used singly or in combination. Among these masking agents, a white pigment such as a titanium oxide is preferred.

Incidentally, in the present invention, from the view point of mechanical strength of the masking layer, it is preferred that the masking agent such as a titanium oxide is sufficiently dispersed in the masking layer. That is, the masking agent is preferred to disperse in the state of a primary particle without agglomeration (aggregation). Moreover, in the case of agglomeration, the particle size (secondary particle size) of the dispersed particle is preferred to be small. For example, the secondary particle size is not larger than 10 $\mu$m (e.g., about 0.1 to 10 $\mu$m), preferably about 0.1 to 7 $\mu$m, and more preferably about 0.1 to 5 $\mu$m. The method for sufficiently dispersing the masking agent is not particularly limited to the specific one, and may include a conventional method, for example, a method using a dispersing machine such as a dispersion mill, a homomixer, a bead mill, a ball mill, a roll (roller) mill, a colloid mill, a sand mill, an atoliter (pulverizing mill), or a paint conditioner.

Further, in order to increase dispersibility of the masking agent, the masking agent (particularly a white pigment) may be used by allowing previously dispersed in a resin (e.g., a resin having a crosslinking group, and being the same-series resin with the binder resin) or a resin solution. The proportion (weight ratio) of the masking agent to be previously dispersed relative to the resin may be, for example, about 50/50 to 99/1, preferably about 60/40 to 97/3, and more preferably about 70/30 to 95/5.

(2) Binder resin

The binder resin is not particularly limited to a specific one, as far as the resin has adhesive property (adhesiveness) and film-forming property, and a variety of thermoplastic resins (e.g., a polyamide-series resin, a polyester-series resin, a styrenic resin, an olefinic resin, a cellulose derivative, a polycarbonate-series resin, a polyvinyl acetate-series resin, an acrylic resin, a vinyl chloride-series resin, a thermoplastic urethane-series resin) and thermosetting resins can be used. These binder resins may have a crosslinking group (e.g., an isocyanate group, a hydroxyl group, a carboxyl group, an amino group, an epoxy group, a methylol group, and an alkoxysilyl group). These binder resins may be used singly or in combination.

Among these binder resins, in terms of adhesive strength (adhesive strength of the masking agent or adhesive strength between layers) or flexibility, the urethane-series resin is preferred. As the urethane-series resin, urethane-series resins exemplified in the paragraph of the adhesive layer may be used. Among the urethane-series resins, a polyester type urethane-series resin and a polycarbonate type urethane-series resin (e.g., an aliphatic polycarbonate type urethane-series resin having anti-yellowing property) are preferred. In particular, it is preferred to use a polyester type urethane-series resin obtainable by using a diol component containing an aliphatic polyester diol of not less than 50% by weight. The urethane-series resin may comprise a urethane-series resin having a crosslinking group such as an isocyanate group.

The melting point (or softening point) of the binder resin can be selected from the range of 70 to 180°C, for example, is about 70 to 150°C, preferably about 70 to 120°C, and more preferably about 80 to 110°C.

The proportion (weight ratio) of the masking agent relative to the binder resin [the former/the latter] is, for example, about 30/70 to 90/10, preferably about 35/65 to 80/20, and more preferably about 40/60 to 75/25 (particularly about 45/55 to 70/30). In the present invention, since the proportion of the masking agent can be enhanced without deteriorating various properties such as elongation and strength, the transfer sheet is excellent in handleability even having a high masking ability (particularly a white masking ability). Further, the transfer layer has high durability even after the transfer layer is transferred to an object.

(3) Crosslinking agent

The crosslinking agent may be suitably selected depending on the kind of the binder resin, and the crosslinking agent may comprise a compound (e.g., a polyfunctional compound having the crosslinking group or a polyvalent metal ion) having not less than two reactive functional groups relative to a functional group of the binder resin. More specifically, the crosslinking agent may include a polyisocyanate, a polyamine, a polycarboxylic acid, a silane coupling agent, a polyethylene imine, a urea resin, a melamine resin, a magnesium ion (a compound capable of generating a magnesium ion), and others. In the case where the binder resin comprises a urethane-series resin, it is preferred to use a polyisocyanate (e.g., diisocyanate components or polyisocyanate components exemplified in the paragraph of the adhesive layer) as the crosslinking agent. Use of the crosslinking agent further ensures to improve strength or adhesiveness to the adhesive layer.

The proportion of the crosslinking agent is, relative to 100 parts by weight of the binder resin, for example, about 0.1 to 30 parts by weight, preferably about 0.5 to 20 parts by weight, and more preferably about 1 to 10 parts by weight.

The thickness of the masking layer is, for example, about 3 to 500 $\mu$m, preferably about 5 to 300 $\mu$m, and more preferably about 10 to 100 $\mu$m (particularly about 15 to 50 $\mu$m).

The masking layer may contain, depending on needs, a variety of additives, for example, a dye fixing agent, a stabilizer (e.g., an antioxidant, an ultraviolet ray absorber and a heat stabilizer), an antistatic agent, a flame retardant, a lubricant, an antiblocking agent, a filler, a coloring agent, an antifoaming agent, a coatability improvable agent, and a thickener.

(Image-receiving layer)

Although the masking layer itself may be used as a layer for recording an image, as a layer for recording the image, an image-receiving layer may be formed on the masking layer. The image-receiving layer may comprise a resin having ink-fixability, and may be a non-porous or porous layer (e.g., a layer comprising an organic or inorganic particle and a binder resin, a layer containing a porous organic or inorganic particle, a layer obtainable by a phase-separation method in which a polymer (macromolecule) is microphase-separated with both a good solvent thereto and a poor solvent thereto).

The image-receiving layer may be suitably selected depending on the kinds of the recording system, and in view of imparting softness to the transfer layer, the image-receiving layer may contain at least a soft resin. The soft resin may include, for example, a thermoplastic resin such as an olefinic resin, a styrenic resin, a vinyl-series resin (e.g., a vinyl chloride-series resin, a polyvinyl acetate-series resin, and a polyvinyl butylal-series resin), an acrylic resin, a thermoplastic elastomer, a polyamide-series resin, a polyester-series resin, or a urethane-series resin; and a thermosetting resin such as a urethane-series resin or an epoxy resin. These soft resins may be used singly or in combination. Moreover, even if a hard resin is used, such a hard resin can be used as a soft resin composition by mixing the hard resin with a rubber component or a plasticizer (e.g., a mineral oil or a paraffin oil). Among these soft resins, a vinyl chloride-series resin, a polyester-series resin, and a urethane-series resin are preferred.

The vinyl chloride-series resin may include, for example, a polyvinyl chloride, a vinyl chloride-vinyl acetate copolymer, a vinyl chloride-$C_{2-4}$olefin copolymer (e.g., a vinyl chloride-ethylene copolymer, and a vinyl chloride-propylene copolymer), a vinyl chloride-(meth)acrylate copolymer (e.g., a vinyl chloride-methyl methacrylate), a vinyl chloride-acrylonitrile copolymer, an ethylene-vinyl acetate copolymer, a copolymer in which a vinyl chloride is graft-polymerized in a polyurethane, and the like. These vinyl chloride-series resins may be a soft resin containing a conventional plasticizer. As the plasticizer, there may be mentioned, for example, a phthalate-series plasticizer [e.g., dibutyl phthalate (DBP), and dioctyl phthalate (DOP)], a phosphate-series plasticizer [e.g., tricresyl phosphate (TCP), and trioctyl phosphate (TOP)], an aliphatic polycarboxylate [e.g., dioctyl adipate (DOA), and dioctyl sebacate (DOS)], an epoxy-series plasticizer [e.g., an alkyl epoxy stearate, and an epoxyfied soy bean oil], and others. The proportion of the plasticizer relative to 100 parts by weight of the vinyl chloride-series resin is, for example, about 1 to 100 parts by weight, preferably about 3 to 75 parts by weight, and more preferably about 5 to 50 parts by weight.

The polyester-series resin may include polyester-series resins exemplified in the paragraph of the adhesive layer. Among the polyester-series resins, an aliphatic polyester-series resin, a polyester-series elastomer, and a polyester resin having a urethane bond are preferred.

As the urethane-series resin, urethane-series resins exemplified in the paragraph of the adhesive layer may be used. Among the urethane-series resins, the preferred one includes a polyester type urethane-series resin, a polycarbonate type urethane-series resin (e.g., an aliphatic polycarbonate type urethane-series resin having anti-yellowing property). In particular, a polyester type urethane-series resin obtainable by using a diol component containing an aliphatic polyester diol of not less than 50% by weight is preferred.

The softening point of the soft resin can be selected from the range of 70 to 180°C, and for example, is about 70 to 150°C, preferably about 70 to 120°C, and more preferably about 80 to 110°C.

Among these soft resins, in view of adhesiveness or flexibility, the urethane-series resin is particularly preferred.

The image-receiving layer may comprise at least an organic or inorganic particle (particularly an organic or inorganic particle and a binder resin) from the aspect of the ink-absorbability. In particular, such an image-receiving layer is suitable for recording an image with an ink jet recording system.

(1) Organic or inorganic particle

As the organic particle, there may be used various resin particles, for example, a thermoplastic resin particle or a thermosetting resin particle. The thermoplastic resin particle may include, for example, a particle made of a crosslinked or uncrosslinked resin such as an olefinic resin, a styrenic resin, an acrylic resin, a polycarbonate-series resin, a polyester-series resin, a polyamide-series resin, a thermoplastic urethane-series resin, a polyphenylene oxide-series resin, or a vinyl-series resin. The thermosetting resin particle may include, for example, a particle made of a resin such as a phenolic resin, a silicone-series resin, an amino resin (e.g. , a urea resin, a melamine resin, and a benzoguanamine resin), a urethane-series resin, or an epoxy-series resin. These organic particles may be used singly or in combination. These organic particles may be a porous organic particle from the aspect of ink-absorbability.

The inorganic particle may include, for example, a metal powder, a white carbon, a metal silicate (e.g., calcium silicate, aluminum silicate, magnesium silicate, and magnesium aluminosilicate), a mineral particle (e.g., a zeolite, a diatomite, a burnt diatomite, a talc, a kaolin, a sericite, a bentonite, a smectite, and a clay), a metal carbonate (e.g., magnesium carbonate, a ground calcium carbonate (calcium carbonate heavy), and a precipitated calcium carbonate light), a metal oxide (e.g., alumina, silica, and zinc oxide), a metal hydroxide (e.g., aluminum hydroxide, calcium hydroxide, and magnesium hydroxide), a metal sulfate (e. g. , calcium sulfate, and barium sulfate), and the like. These inorganic particles may be used singly or in combination. Among these inorganic particles, porous inorganic particles (e.g., zeolite, and alumina) are preferred from the viewpoint of ink-absorbability.

The average particle size of the organic or inorganic particle is, for example, about 0.2 to 150 $\mu$m, preferably about 1 to 130 $\mu$m, and more preferably about 3 to 120 $\mu$m.

Among these organic or inorganic particles , in view of mechanical properties of the sheet or texture (softness) of the object with the transferred image, the organic particles are preferred. In particular, from the aspect of high ink-absorbability of the image-receiving layer as well as excellent mechanical properties such as elongation of the image-receiving layer and improvement in water resistance or washing resistance after transferring, the urethane-series resin particle is preferred.

(1a) Urethane-series resin particle

As the urethane-series resin particle, there may be used a particle comprising a urethane-series resin(s) exemplified in the paragraph of the adhesive layer. These particles may be used singly or in combination. The urethane-series resin may be crosslinked or modified with a chain-extending agent or crosslinking agent such as a polyamine compound. Examples of the polyamine compound may include a hydrazine, an aliphatic diamine (e.g., ethylenediamine, trimethylenediamine, tetramethylenediamine, hexamethylenediamine, trimethylhexamethylenediamine, and octamethylenediamine), an aromatic amine (e.g., phenylenediamine, xylylenediamine, and diphenylmethanediamine), an alicyclic diamine [e.g., hydrogenated xylylenediamine, bis(4-aminocyclohexyl) methane, and isophoronediamine], and others. These polyamine compounds may be used singly or in combination.

The average particle size of the urethane-series resin particle is, for example, about 1 to 150 $\mu$m, preferably about 10 to 100 $\mu$m, and more preferably about 30 to 80 $\mu$m.

The softening point (or melting point) of the urethane-series resin particle is, for example, about 50 to 230°C, preferably about 80 to 220°C, and more preferably about 90 to 200°C. Too low softening point is sometimes attributed to blocking of the transfer sheet because of low ink-acceptability. On the contrary, too high softening point may inhibit film-forming at transferring.

It is preferred that the softening point of the urethane-series resin particle is higher than a temperature for forming the image-receiving layer and lower than a transferring temperature. The urethane-series resin particle having such a softening point is not film-formable at a temperature for forming the image-receiving layer, and can acquire air space (void) in the image-receiving layer. Further, such a urethane-series resin particle can inhibit ink-leakage or crack of the transfer layer by partially or wholly film-forming with softening or flowing at a thermally-transferring temperature. Furthermore, the urethane-series resin particle may have a hot melt adhesive property.

The urethane-series resin particle may be a porous particle. The porous urethane-series resin particle enhances ink-absorbability of the image-receiving layer.

The average particle size of the urethane-series resin particle may be selected from the range of not larger than 150 $\mu$m (e.g., about 0.05 to 150 $\mu$m, and preferably about 1 to 150 $\mu$m), for example, is not larger than 100 $\mu$m (e.g., about 2 to 100 $\mu$m), and preferably not larger than 70 $\mu$m (e.g., about 3 to 70 $\mu$m). Too large particle size deteriorates appearance and ink-absorbability.

The proportion of the urethane-series resin particle can be selected from the range of about 10 to 10000 parts by weight, on solid bases, relative to 100 parts by weight of the binder resin, and is preferably about 200 to 5000 parts by weight, and more preferably about 300 to 3000 parts by weight (particularly about 500 to 2000 parts by weight).

(1b) Hot-melt adhesive particle

Such a urethane-series resin particle is preferably combined with a hot-melt adhesive particle. Combination of the urethane-series resin particle with the hot-melt adhesive particle inhibits fall-off of the particle from the image-receiving layer, as well as improves mechanical properties such as elongation or abrasion-resistance and washing resistance. The hot-melt adhesive particle may include, for example, a particle comprising a hot-melt adhesive resin exemplified in the paragraph of the adhesive resin. These hot-melt adhesive resins may be used singly or in combination. Among these hot-melt adhesive resins, in the event that the object is clothes or the like, particularly a hot-melt adhesive resin comprising a polyamide-series resin can impart excellent texture (softness) as well as high washing resistance and water resistance to the transfer image.

The melting point of the hot-melt adhesive particle (e.g., a polyamide-series resin particle) is not higher than 200°C, and can be selected from the range of , for example, about 40 to 200°C, and preferably about 50 to 170°C. The hot-melt adhesive particle may at least contain a particle having a melting point of not higher than the heating temperature of the image-receiving layer.

The heating temperature of the image-receiving layer is usually a temperature (e.g., about 70 to 90°C) for film-forming by drying a transfer layer coated (painted) on the support. The melting point of the hot-melt adhesive particle is about not higher than the heating temperature (e.g. , about 80°C), for example, about 40 to 80°C, preferably about 50 to 80°C, and more preferably about 60 to 80°C (particularly about 70 to 80°C). The above range of the melting point of the hot-melt adhesive particle causes hot melt adhesive property of the hot-melt adhesive particle in the film-forming of the image-receiving layer, as well as inhibits fall-off or drop of the urethane-series resin particle by adhering to the urethane-series resin particle. Incidentally, even when the hot-melt adhesive particle is heated at a temperature of not lower than a melting point thereof, in the usual film-forming condition, the hot-melt adhesive particle plays a roll for fixing the urethane-series resin particle to the image-receiving layer by adhering to the urethane-series resin particle with maintaining the particle shape.

The average particle size of the hot-melt adhesive particle is, for example, about 1 to 150 $\mu$m, preferably about 10 to 130 $\mu$m, and more preferably about 30 to 120 $\mu$m (particularly about 50 to 120 $\mu$m).

Further, as the hot-melt adhesive particle (e.g., a polyamide-series resin particle), a plurality kinds of hot-melt adhesive resin particles having different melting points may be used in combination. For example, a hot-melt adhesive particle (A) having a melting point over the heating temperature of the image-receiving layer may be combined with a hot-melt adhesive particle (B) having a melting point of not higher than the heating temperature.

(A) Hot-melt adhesive particle

The melting point of the hot-melt adhesive particle (A) is sufficient to be over the heating temperature (e.g. , about 80°C), and for example, is about 85 to 200°C, preferably about 90 to 170°C, and more preferably about 90 to 150°C (particularly about 100 to 150°C). Moreover, the hot-melt adhesive particle (A) may comprise a hot-melt adhesive particle (A1) having an oil absorption of not less than 50 mL/100 g and a hot-melt adhesive particle (A2) having an oil absorption of less than 50 mL/100 g.

The oil absorption of the hot-melt adhesive particle (A1) may be not less than 50 mL/100 g (e.g. , about 70 mL/ 100 g to 500 mL/100 g), and preferably not less than 75 mL/100 g (e.g. , about 100 mL/100 g to 300 mL/100 g). Incidentally, the oil absorption is measured using linseed oil in accordance with JIS K 5107 (JIS; Japanese Industrial Standards).

Moreover, the specific surface area of the hot-melt adhesive particle (A1) may be about 5 to 100 $m^2$/g (e.g.,

about 10 to 50 m$^2$/g), and preferably about 10 to 40 m$^2$/g.

The hot-melt adhesive particle (A1) satisfying such a property is usually a porous hot-melt adhesive particle (e.g., a porous polyamide-series resin particle).

The oil absorption of the hot-melt adhesive particle (A2) is less than 50 mL/100 g, preferably not more than 48 mL/100 g, more preferably not more than 47 mL/100 g (e.g. , about 10 mL/100 g to 47 mL/100 g).

The proportion (weight ratio) of the hot-melt adhesive particle (A1) relative to the hot-melt adhesive particle (A2), [(A1)/(A2)], is about 80/20 to 1/99, preferably about 60/40 to 5/95, and more preferably about 40/60 to 10/90 (particularly about 30/70 to 15/85).

The average particle size of the hot-melt adhesive particle (A) is, for example, about 1 to 150 $\mu$m, preferably about 3 to 100 $\mu$m, and more preferably about 5 to 80 $\mu$m. The hot-melt adhesive particle (A) may contain a particle having an average particle size of larger than the thickness of the transfer layer.

(B) Hot-melt adhesive particle

The melting point of the hot-melt adhesive particle is not higher than the heating temperature (e.g., about 80°C), for example, about 40 to 80°C, preferably about 50 to 80°C, and more preferably about 60 to 80°C. Incidentally, even if the hot-melt adhesive particle (B) is heated at a temperature of not lower than a melting point thereof, in the usual film-forming condition, the hot-melt adhesive particle (B) plays a roll for improving adhesiveness to the hot-melt adhesive particle (A) or the urethane-series resin particle with maintaining the particle shape.

The average particle size of the hot-melt adhesive particle (B) is, for example, about 10 to 150 $\mu$m, preferably about 30 to 130 $\mu$m, and more preferably about 50 to 120 $\mu$m.

The difference in the melting points between the hot-melt adhesive particle (A) and the hot-melt adhesive particle (B) is not less than 5°C (e.g., about 5 to 100°C), preferably not less than 10°C (e.g., about 10 to 70°C), more preferably about 20 to 70°C (e.g., about 20 to 50°C), and particularly about 30 to 70°C (e.g., about 30 to 50°C).

The proportion (weight ratio) of the hot-melt adhesive particle (A) relative to the hot-melt adhesive particle (B), [the former/the latter], is about 99.9/0.1 to 50/50, preferably about 99.5/0.5 to 70/30, and more preferably about 99/1 to 90/10.

The proportion of the hot-melt adhesive particle can be selected from the range of about 10 to 10000 parts by weight, on solid bases, relative to 100 parts by weight of the binder resin, and is preferably about 200 to 5000 parts by weight, and more preferably about 300 to 3000 parts by weight (particularly about 500 to 2000 parts by weight).

The proportion (weight ratio) of the urethane-series resin particle relative to the hot-melt adhesive particle [the former/the latter] can be selected from the range of about 99/1 to 1/99, for example, is about 95/5 to 5/95, preferably about 90/10 to 10/90, and more preferably about 70/30 to 20/80 (particularly about 50/50 to 20/80). The both particles within such a range contribute to give an image-receiving layer excellent in balance among ink-absorbability, durability, and hot melt adhesiveness.

The proportion of the total amount of the organic or inorganic particle can be selected from the range of about 10 to 20000 parts by weight on solid bases relative to 100 parts by weight of the binder resin. In order to impart porous property to the image-receiving layer, it is preferred that the proportion of the total amount of the particle relative to the binder resin is larger, and for example, about 200 to 10000 parts by weight, and preferably about 300 to 5000 parts by weight (particularly about 500 to 2000 parts by weight) relative to 100 parts by weight of the binder resin. As mentioned above, the larger proportion of the total amount of the particle relative to the binder resin increases porous property of the image-receiving layer. In particular, a porous image-receiving layer comprising a urethane-series resin particle and a hot-melt adhesive particle increases ink-absorbability, as well as improves in sharpness or clearness of the image and water resistance or washing resistance due to shrinkage of the thermally-transferred image-receiving layer.

(2) Binder resin

The binder resin is not particularly limited to a specific one as far as having film-forming property, and may be used binder resins exemplified in the paragraph of the masking layer, a hydrophilic polymer (e.g., a polyoxyalkylene glycol-series resin such as a polyethylene glycol, a vinyl alcohol-series resin such as a polyvinyl alcohol, and a cellulose derivative such as a cellulose acetate), and the like. These binder resins may be used singly or in combination.

Among the binder resins, the binder resin constituting the image-receiving layer is preferred to be a urethane-series resin or a polyester-series resin in view of adhesiveness or flexibility. In order to enhance ink fixability, these binder resins may be a cationic resin having a tertiary amino group or a quaternary ammonium salt introduced in a molecule thereof. For example, in the case of the urethane-series resin, the urethane-series resin may be a urethane-series resin obtainable by a reaction of a diisocyanate component with a diol (particularly polymer diol) component having a free tertiary amino group. Incidentally, the diol having a tertiary amino group may be prepared by ring-opening polymerizing an alkylene oxide or a lactone with N-methyl diethanol amine as an initiator. The tertiary amino group may form a quaternary ammonium salt.

The binder resin may be used as an organic solvent solution, an aqueous solution, or an aqueous emulsion. The aqueous solution or aqueous emulsion of the binder resin may be prepared by dissolving, or emulsifying and dispersing the binder resin with an emulsifier, or may be prepared by introducing an ionic functional group such as a free carboxyl group or a tertiary amino group into the binder resin molecule, followed by dissolving or dispersing the resultant binder resin with an alkali or an acid.

Such a binder resin having a free carboxyl group or a tertiary amino group introduced into a molecule thereof, for example, in the case of the urethane-series resin, comprises a urethane-series resin obtainable by a reaction of a diisocyanate component with a diol (particularly a polymer diol) component having a free carboxyl group or a tertiary amino group. Incidentally, the diol (particularly polymer diol) having a free carboxyl group, for example, may be obtained by a reaction of a diol component with a polycarboxylic acid having not less than three carboxyl groups or an acid anhydride thereof (e.g., a tetrabasic acid anhydride such as pyromellitic anhydride), or with a polycarboxylic acid having a sulfonic acid group (e.g., sulfoisophthalic acid); by ring-opening reaction of a lactone with dimethylolpropionic acid as an initiator.

(3) Dye fixing agent

In order to improve ink-fixability, the image-receiving layer may further comprise a dye fixing agent. In particular, in the case where a cationic monomer is not introduced into the binder resin, the dye fixing agent is preferably used. The dye fixing agent may include a cationic compound (e.g., a dye fixing agent having a low molecular weight) or a polymeric dye fixing agent.

The cationic compound may include an aliphatic amine salt, a quaternary ammonium salt (e.g., an aliphatic quaternary ammonium salt, an aromatic quaternary ammonium salt, and a heterocyclic quaternary ammonium salt), and the like. These cationic compounds may be used singly or in combination. Among them, the preferred cationic compound includes an aliphatic quaternary ammonium salt (e.g., a tetra$C_{1-6}$alkylammonium halide such as tetramethylammonium chloride, tetraethylammonium chloride, tetramethylammonium bromide or tetraethylammonium bromide, a tri$C_{1-6}$alkyl$C_{8-20}$alkylammonium halide such as trimethyllaurylammonium chloride or trimethyllaurylammonium bromide, and a di$C_{1-6}$alkyldi$C_{8-20}$alkylammonium halide such as dimethyldilaurylammonium chloride or dimethyldilaurylammonium bromide), especially a tetra$C_{1-4}$alkylammonium halide (e.g., a tetra$C_{1-2}$alkylammonium halide), a tri$C_{1-4}$alkyl$C_{10-16}$alkylammonium halide (e.g., a tri$C_{1-2}$alkyl$C_{10-14}$alkylammonium halide), a di$C_{1-4}$alkyldi$C_{10-16}$alkylammonium halide (e.g., a di$C_{1-2}$alkyldi$C_{10-14}$alkylammonium halide). The aliphatic ammonium salt and the quaternary ammonium salt are commercially available as, for example, "ACTEX FC-7" (manufactured by Morin Chemical Industries Co., Ltd.) and as "CATIOGEN L" (manufactured by Dai-ichi Kogyo Seiyaku Co., Ltd.), respectively. These cationic compounds may be used singly or in combination.

The polymeric dye fixing agent usually has a cationic group (in particular, a strong cationic group such as a guanidyl group or a quaternary ammonium salt group) in a molecule thereof.

As the polymeric dye fixing agent, there may be mentioned, for example, a dicyane-series compound (e.g., a dicyanediamide-formaldehyde polycondensate), a polyamine-series compound [e.g., an aliphatic polyamine such as diethylenetriamine, an aromatic polyamine such as phenylenediamine, a condensate of a dicyandiamide and a (poly)$C_{2-4}$alkylenepolyamine (e.g., a dicyanediamide-diethylenetriamine polycondensate)], a polycationic compound and the like. As the polycationic compound, there may be mentioned, for example, an epichlorohydrine-di$C_{1-4}$alkylamine addition polymer (e.g., an addition polymer of an epichlorohydrine-dimethylamine), a polymer of an allylamine or its salt (e.g., a polymer of an allylamine or its salt, a polymer of a polyallylamine or its hydrochloride), a polymer of a diallyl$C_{1-4}$alkylamine or its salt (e.g., a polymer of a diallylmethylamine or its salt), a polymer of a diallyldi$C_{1-4}$alkylammonium salt (e.g., a polymer of a diallyldimethylammonium chloride), a copolymer of a diallylamine or its salt and a sulfur dioxide (e.g., diallylamine salt-sulfur dioxide copolymer), a diallyldi$C_{1-4}$alkylammonium salt-sulfur dioxide copolymer (e.g., diallyldimethylammonium salt-sulfur dioxide copolymer), a copolymer of a diallyldi$C_{1-4}$alkylammonium salt and a diallylamine or its salt or its derivative (e.g., a copolymer of a diallyldimethylammonium salt-diallylamine hydrochloride derivative), a diallyldi$C_{1-4}$alkylammonium salt polymer(e.g.,diallyldimethylammoniumsalt polymer), a dialkylaminoethyl(meth)acrylate quaternary salt polymer [e.g., a di$C_{1-4}$alkylaminoethyl(meth)acrylate quaternary salt polymer], a diallyldi$C_{1-4}$alkylammonium salt-acrylamide copolymer (e.g., a diallyldimethylammonium salt-acrylamide copolymer), an amine-carboxylic acid copolymer, and the like. These polymeric dye fixing agents may be used singly or in combination.

These dye fixing agents may be used singly or in combination. Among these dye fixing agents, from the viewpoint of inhibition of generating harmful substances (e.g., benzyl chloride) by heat, it is preferred to use an aliphatic dye fixing agent, for example, an alkylammonium halide [for example, a trialkylammonium halide (e.g., a tri$C_{1-2}$alkyl$C_{8-16}$alkylammonium halide), and/or a di$C_{1-2}$alkyldi$C_{8-20}$alkylammonium halide], particularly a trimethyl $C_{8-16}$alkylammonium halide. Further, among the alkylammonium halides, a halide free from a chlorine ion, e.g., a bromide, is preferred from the viewpoint of restriction of burden to the environment.

The proportion of the dye fixing agent relative to 100 parts by weight of the soft resin (binder resin) is, on solid bases, about 1 to 200 parts by weight (e.g. , about 5 to 200 parts by weight), preferably about 10 to 150 parts by weight, and more preferably about 10 to 100 parts by weight (particularly about 10 to 60 parts by weight).

The image-receiving layer may contain, if necessary, a variety of additives, for example, other dye fixing agent (s), astabilizer (e.g., an antioxidant, an ultraviolet ray absorber and a heat stabilizer), an antistatic agent, a flame retardant, a lubricant, an antiblocking agent, a filler, a coloring agent, an antifoaming agent, a coatability improvable agent, and a thickener. The hot-melt adhesive particle may contain a tackifier (e.g., rosin or a derivative thereof, and a hydrocarbon-series resin), a wax and the like in addition to the above additive(s).

The thickness of the image-receiving layer is, for example, about 5 to 150 $\mu$m, preferably about 10 to 100 $\mu$m, and more preferably about 20 to 80 $\mu$m (particularly about 20 to 70 $\mu$m). The coating amount (on dry basis) is about 5 to 150 g/m , preferably about 10 to 100 g/m , and more preferably about 20 to 50 g/m$^2$.

(Anchor layer)

The anchor layer comprises a resin component capable of improving adhesive strength (adhesivity) between the masking layer and the image-receiving layer. As such a resin component, various thermoplastic and thermosetting resins may be employed. In terms of effective improvement in adhesive strength (adhesivity) between the masking layer and the image-receiving layer, it is preferred to use the resin constituting the anchor layer preferably comprises a resin which is the same series or kind with a resin component contained in both the masking layer and the image-receiving layer (or a resin having an affinity to a resin component which is contained in both layers). Further, from the viewpoint of fixability of ink exudated (or bleeding) from the image-receiving layer, the anchor layer preferably comprises a cationic resin into which a tertiary amino group or a quaternary ammonium salt is introduced. For example, in the event that the binder resin of the masking layer comprises a urethane-series resin, in view of adhesive strength and flexibility, the resin component constituting the anchor layer is preferred to comprise a urethane-series resin (e.g., the above-mentioned thermoplastic urethane-series resin), and particularly a cationic thermoplastic urethane-series resin from the viewpoint of enhancing adhesive strength (adhesivity) between the layers as well as supplementally improving ink-fixability of the image-receiving layer.

As the urethane-series resin, there may be used urethane-series resins exemplified in the paragraph of the adhesive layer. For example, it is preferred to use an aliphatic polyester type urethane-series resin obtainable by using a diol component containing at least an aliphatic polyester diol, or a polycarbonate type urethane-series resin (e.g., an aliphatic polycarbonate type urethane-series resin having anti-yellowing property) and others. Examples of the cationic resin may include cationic urethane-series resins exemplified in the paragraph of the image-receiving layer.

The anchor layer may contain, depending on needs, a variety of additives, for example, a stabilizer (e.g., an antioxidant, an ultraviolet ray absorber and a heat stabilizer), an antistatic agent, a flame retardant, a lubricant, an antiblocking agent, a filler, a coloring agent, an antifoaming agent, a coatability improvable agent, and a thickener.

The thickness of the anchor layer is, for example, about 0.1 to 30 $\mu$m, preferably about 0.5 to 20 $\mu$m, and more preferably about 1 to 10 $\mu$m (particularly about 1 to 5 $\mu$m). The coating amount (on dry bases) is about 0.1 to 50 g/m$^2$, preferably about 0.5 to 30 g/m$^2$, and more preferably about 1 to 10 g/m$^2$.

(Release layer)

Upon forming an image to a transfer layer by transferring a record sheet on which the image is formed in advance, the transfer sheet may be relatively releasable from the record sheet after bring the record sheet into contact with the transfer sheet for thermally-transferring the image of the record sheet. For example, at least one of the transfer layer and the record sheet, or both of them has or have a surface having releasability (particularly thermal releasability). To be more precise, the thermal releasability in the present invention means that at lease one surface of the transfer layer and the record sheet, regardless of the kinds of transferring methods (image-forming method), has releasability to the following degree, that is, the transfer layer can be released from the record sheet without adhesion even when the transfer layer is brought into contact with the record sheet and heated. The embodiment in which the transfer layer has releasability may include, for example, the embodiment that a release layer is formed on the surface of the transfer layer (on the contact surface relative to the record sheet).

The release layer is not particularly limited to a specific one as far as the layer has releasability. The release layer, for example, may comprise a resin component having releasability. The release layer usually comprises a binder resin and a particulate or powdery matter.

The binder resin may be binder resins exemplified in the paragraph of the masking layer, or may be a binder resin having releasability. As the binder resin having releasability, there may be exemplified a binder resin having a silicone component (e.g., a silicone-modified acrylic resin, a silicone-modified epoxy-series resin, a silicone-modified urethane-series resin, and a silicone-modified polyester-series resin), and the like. The silicone component may be contained in the resin, or combined as a copolymer. Incidentally, these binder resins having releasabilitymay singly constitute the release layer without combining the particulate or powdery matter. These binder resins may be used singly or in combination. Among these binder resins, a binder resin having a silicone component, particularly a silicone-modified acrylic resin is preferred from the viewpoint of excellent releasability.

The particulate or powdery matter may include an organic or inorganic particle. Examples of the organic or inorganic particle may include organic or inorganic particles exemplified in the paragraph of the masking layer, a particle (wax particle) made of a wax such as a Fischer-Tropsch wax, an ester wax, a higher fatty acid or a salt thereof, a higher fatty acid ester, or a higher fatty acid amide. These organic or inorganic particles may be used singly or in combination. Among these particulate or powdery matters, in terms of excellent releasability, an inorganic particle such as a silica particle, an alumina particle, a talc, or a glass bead or a glass powder, particularly a silica particle is preferred.

The average particle size of the particulate or powderymatter is, for example, about 0.1 to 50 $\mu$m, preferably about 0.5 to 30 $\mu$m, and more preferably about 1 to 10 $\mu$m (particularly about 1 to 5 $\mu$m).

The proportion of the particulate or powdery matter is, relative to 100 parts by weight of the binder resin, for example, about 1 to 200 parts by weight, preferably about 10 to 150 parts by weight, and more preferably about 30 to 100 parts by weight.

In order to enhance affinity of the particulate or powdery matter to the binder resin, the release layer may further comprise a crosslinking agent. As the crosslinking agent, there may be used crosslinking agents exemplified in the paragraph of the masking layer. Among the crosslinking agents, a polyisocyanate, a silane coupling agent and the like are preferred.

The proportion of the crosslinking agent relative to 100 parts by weight of the total amount of the binder resin and the particulate or powdery matter is, for example, about 1 to 50 parts by weight, preferably about 3 to 30 parts by weight, and more preferably about 5 to 20 parts by weight.

The thickness of the release layer is, for example, about 0.1 to 50 $\mu$m, preferably about 0.5 to 30 $\mu$m, and more preferably about 1 to 20 $\mu$m (particularly about 2 to 10 $\mu$m).

Further, if necessary, the transfer sheet may have an antistatic layer formed on the surface of the transfer layer.

The thickness of the transfer layer is, for example, about 50 to 180 $\mu$m, preferably about 70 to 160 $\mu$m, and more preferably about 100 to 150 $\mu$m. The transfer layer having a thickness of the above range is excellent in handleability as the transfer sheet, and the texture (softness) of a fabric such as clothes with a transferred image formed thereon is not deteriorated even if the object is thermally-transferred.

[Transfer sheet]

In the transfer sheet of the present invention, in terms of adhesive strength (adhesivity) between layers, each layer of the transfer layer preferably at least comprises the same series or same kind of resin with each other as a resin component constituting each layer. In particular, use of a urethane-series resin as the common resin in each layer is attributed to good mechanical properties of sheet such as elongation or strength, in addition, to handleability as the transfer sheet.

The transfer sheet of the present invention is excellent in masking ability (particularly white masking ability). For example, the whiteness degree (L value) measured from the side of the masking layer is not less than 88, preferably not less than 90, and more preferably not less than 92.

The transfer sheet of the present invention is excellent in mechanical properties such as flexibility and strength regardless of containing a large amount of a masking agent (such as a pigment). The elongation at break of the transfer layer is, for example, not less than 30% (e.g., about 30 to 200%), preferably about 40 to 200%, and more preferably about 50 to 200%.

Since the transfer sheet of the present invention has the above-mentioned properties, the transfer sheet excels in masking ability as well as a mechanical property such as strength or elongation. For example, even if the transfer sheet is thermally-transferred under pressure with a slidable heating member (device) such as an iron, generation of the pressure trace is restricted.

The transfer sheet of the present invention may be used as a plain (e.g., white) transfer sheet such as a white transfer sheet without forming an image to the transfer sheet, or may be used as a transfer sheet for forming an image to a transfer layer thereof.

[Production process of transfer sheet]

The transfer sheet of the present invention may be produced by sequentially forming each layer constituting a transfer layer on one surface of a support. That is, the transfer sheet may be produced by forming an adhesive layer separable from a support on a release surface of the support, and forming a masking layer on the adhesive layer. In the case of forming other layer(s), on the masking layer, an anchor layer, an image-receiving layer, a release layer, and others may be formed.

More specifically, depending on the layer structure of the transfer sheet, a coating agent comprising the above-mentioned component may be applied on the releasable surface of the support to form a transfer sheet. The binder resin or the adhesive resin can be usually employed in the form of an aqueous solution or an emulsion. Therefore, a coating agent for the transfer layer can be prepared by mixing the aqueous solution or emulsion containing the binder resin or the adhesive resin with other component (s). The solvent of the aqueous solution or emulsion may be water alone, or if necessary may comprise a hydrophilic organic solvent such as an alcohol. Therefore, after coating and drying a coating agent for a layer, a coating agent for another layer may be coated in layers.

The coating agent can be applied on at least one side of the support by a conventional method such as roller coating, air knife coating, blade coating, rod coating, bar coating, comma coating or graver coating. The coated layer can be formed by drying the coating agent at a temperature of about 50 to 150°C (preferably, about 80 to 120°C): Incidentally, in the case of forming the image-receiving layer containing a hot-melt adhesive particle, the heating or drying temperature of the image-receiving layer may be suitably selected depending on the melting point of the hot-melt adhesive particle. For example, in the case of using the hot-melt adhesive particle (A) and the hot-melt adhesive particle (B) in combination, the heating or drying temperature of the image-receiving layer may be suitably selected from a range between the melting points of both particles (A) and (B). That is, the transfer layer can be formed by drying the coated layer at a temperature of about 50 to 150°C, preferably about 60 to 120°C, and more preferably about 70 to 100°C (particularly about 70 to 90°C).

[Method for forming image]

The method of the present invention for forming an image is a method for forming an image on an object, which comprises a step for releasing the support from the transfer sheet, and a step for transferring the transfer layer to the object with bringing the adhesive layer into contact with the object, wherein the image is recorded onto the transfer layer.

The method for forming an image on the transfer layer of the transfer sheet may be a method recording the image onto the transfer layer before transferring to the object, or may be a method recording the image onto the transfer layer after transferring to the object. Although the method for recording the image onto the transfer layer before transferring to the object may be a method for recording the image onto the transfer layer after releasing the support, the method is usually a method for recording the image onto the transfer layer before releasing the support.

The image may be directly recorded onto a masking layer, or may be recorded onto an image-receiving layer formed on a masking layer. Moreover, the image may be attached on the masking layer in the form of a film or sheet previously having a recorded image. Among these methods, from the viewpoint of image sharpness or clearness, it is preferred to record the image onto the image-receiving layer.

As the recording method of the image, for example, there may be exemplified an image-recording method in which the masking layer is recorded with a writing material such as an oil-based or water-based ink pen, a recording system such as an ink jet recording system (e.g., an ink jet recording system in which an ink droplet is sprayed onto a sheet from a nozzle thereof), a thermofusibly (heat-melting) transferring system, a sublimation thermally-transferring system, an electrograph system (e.g., a color copying machine, and a color laser printer), or a variety of printing systems (e.g. , an offset printing, a gravure printing, and a screen printing), and other recording systems. In these recording systems (particularly a recording system using a machine such as an ink jet printer or a color laser printer), in terms of convenience or productivity, the usually employed method is a method for recording an image onto a transfer layer before transferring to the object. Incidentally, a film or sheet for adhering to the masking layer may also record an image in the same manner with the recording system for the transfer layer. Further, as detailed in the below-mentioned paragraph of a set for forming the transfer image, the image-recording method may be a method for recording an image onto a transfer layer by transferring a record sheet on which the image is formed beforehand. In the system using a record sheet, the image can be easily recorded onto the transfer layer after transferring to the object.

These recording systems can be used depending on use applications, and from the viewpoint of image sharpness or convenience, a method for forming an image such as an ink jet recording system with a water-based or oil-based ink or a solvent ink, or an electrograph system with a toner ink is commonly used.

The method for forming an image on the transfer layer may be a method for recording an image onto a transfer layer before transferring to the object, or may be a method for recording an image onto a transfer layer after transferring to the object. The method for recording an image onto a transfer layer before transferring to the object may be a method for recording an image onto the transfer layer after releasing from the support, and a method for recording an image onto a transfer layer before releasing the transfer layer from the support is usually employed.

More concretely, the method for transferring the transfer layer to the object comprises releasing the support from the transfer sheet, and heating the transfer layer with bringing the adhesive layer as a releasing surface of the transfer layer into contact with the object. Further, if necessary, the transferring matter having the transfer image may be heated for crosslinking. The heating method may be a method comprising heating the transfer layer with applying pressure on the transfer layer, if necessary through a releasing paper or other releasing material, by means of a heating member (e.g., a slidable heating member (device) such as an iron). The heating temperature can be selected depending on the kind of the resin constituting the adhesive layer, and for example, is about 80 to 250°C, preferably about 100 to 200°C (e.g., 140 to 250°C), and more preferably about 120 to 180°C (particularly about 140 to 180°C). The heating time is, for example, about 5 seconds to 1 minute, and preferably about 10 seconds to 1 minute. The pressure to be applied is, for example, about 500 to 50,000 Pa, and preferably about 1000 to 30,000 Pa.

[Set for forming transfer image]

The set for forming the transfer image according to the present invention comprises the transfer sheet and a record sheet previously having an image formed thereon in advance. The record sheet is used for forming an image on the transfer layer of the transfer sheet by thermally-transferring.

The record sheet is not particularly limited to a specific one as far as the record sheet can form an image thereon and the formed image can be thermally transferred to the transfer layer. The record sheet usually comprises a support and an image-receiving layer. As the support, there may be used supports exemplified in the paragraph of the support of the transfer sheet, e.g., papers or plastic films. The image-receiving layer may comprise a resin component similar to that of the image-receiving layer in the transfer sheet. Depending on the thermally-transferring mechanism, the image-receiving layer may be non-releasable or releasable from the support. Further, the record sheet also may form a similar release layer to that of the transfer sheet so as to impart releasability in accordance with the transfer sheet.

The method for recording an image onto a record sheet in advance is not particularly limited to a specific one, and there may be used a recording system similar to the system for recording onto the transfer layer. In particular, the image formed on the record sheet is usually an image which is thermally-transferable to the transfer layer, for example, the image may be a sublimative image, or a thermofusibly (heat-melting) transferring image. Examples of the sublimative image may include an image formed with a sublimative coloring agent by a sublimative thermally-transferring system, an image formed with a sublimative ink containing a sublimative coloring agent by a recording system such as an ink jet recording system, and others. The thermofusibly-transferred image may include, for example, an image formed with a heat-melting ink (e.g., an ink comprising a coloring agent and a heat-melting component such as a resin or a wax) by using a thermofusibly-transferring system, an image formed with a toner by means of an electrograph system (e.g., a particle comprising a coloring agent, a magnetic powder, and a resin component), and the like. The image recorded to the record sheet can be transferred to the transfer layer by heat, and usually the image is transferred to the transfer layer by heating with bringing the record sheet into contact with the transfer layer. Incidentally, the image-formed surface of the record sheet is usually in contact with the transfer layer.

The method for thermally-transferring an image recorded onto the record sheet to the transfer layer may be either a method comprising thermally-transferring by a non-releasable system (e.g., a method comprising sublimative transferring the sublimative image, and a method comprising thermofusibly transferring the heat-melting transferring image formed on a record sheet which has been release-treated), or a method comprising thermally-transferring by a releasable system (a method comprising thermofusibly-transferring an image-receiving layer of the record sheet, in which the image is recorded by using the-above mentioned various recording systems). Among them, the preferred method includes a method comprising thermally-transferring a non-releasable system (particularly a method comprising sublimatively transferring the sublimative image, and a method comprising thermofusibly-transferring a toner image recorded onto the record sheet which has been release-treated.

The heating method in the thermally-transferring process is not particularly limited to the specific one. For example, there can be used a method comprising heating the transfer sheet by means of a heating member (e.g., a slidable heating member (device) such as an iron, and a heat-pressing machine) with bringing the transfer layer into contact with the record sheet. By using such a method, only a pre-formed image in the record sheet can be thermally-transferred to the transfer layer. The heating temperature can be selected depending on the kind of ink forming an image, and for example, is about 120 to 300°C, preferably about 140 to 250°C, and more preferably about 140 to 200°C. The heating time is, for example, about 5 seconds to 1 minute, and preferably about 10 seconds to 1 minute. The pressure may be applied with heating by means of a heating member, and the pressure to be applied is, for example, about 500 to 50,000 Pa, and preferably about 1000 to 30,000 Pa. For example, in the transferring method of the non-releasable system, by heating and pressurizing the record sheet in such a way, the sublimative coloring agent sublimes to be transferred to the transfer layer in the case of the sublimative image, and the heat-melting ink or toner which is melted (or fused) on the record sheet is melt-transferred to the transfer layer in the case of the heat-melting image. Therefore, since the transfer sheet is transferred in a convenient method such as heating the transfer sheet with bringing the transfer layer into contact with the record sheet on which the image is formed in advance, even after transferring the transfer layer to the object, sharp or clear image can be formed regardless of the kind of the object (e.g., a shape or material thereof).

[Object (Object to be transferred)]

Since the transfer sheet of the present invention has both flexibility and strength, the transfer sheet (or transfer layer) can be transferred to a variety of objects with firm adhesive strength. The object may include a two-or three-dimensional structure made of various materials such as a fiber, a paper, a wood, a plastic, a ceramic and a metal. Further, since the transfer sheet of the present invention excels in flexibility, a fabric (e.g., aT-short), a plastic film or sheet or a paper may be employed as the object. In particular, since the transfer sheet of the present invention is excellent in masking property (particularly white masking property), a sharp or clear image can be formed regardless of a color of an object on the masking layer. Accordingly, the transfer sheet is preferably used for a deep-colored object among the objects. The deep-colored object may be either an object inherently having a deep color, or an object dyed or painted (or stained) with a deep color. The deep color may include black, gray, dark blue (navy blue), blue, and the like (e.g., a color having brightness of about 0 to 0.5, and preferably about 0 to 3).

INDUSTRIAL APPLICABILITY

The transfer sheet of the present invention is useful (effective) as a transfer sheet which is capable of transferring to an object such as a two- or three-dimensional structure made of various materials such as a fiber, a paper, a wood, a plastic, a ceramic and a metal, particularly an object which is painted or dyed with a deep-color.

EXAMPLES

The following examples are intended to describe this invention in further detail and should by no means be interpreted as defining the scope of the invention. Incidentally, in the description, unless otherwise indicated, "part(s)" indicates the proportion by weight. Moreover, the species or characteristics of each component of each layer of the transfer sheets obtained in Examples and Comparative Examples, the species or characteristics of record sheets, as well as methods for evaluating various capabilities or properties of the transfer sheets are shown as follows.

[Each component of each layer in transfer sheet] (Adhesive layer)

Polyester-series urethane resin solution A: manufactured by Dainichiseika Color & Chemicals Mfg. Co., Ltd., Rezamine UD1305, solvent: dimethylformamide/methyl ethyl ketone = 40/60 (weight ratio), solid content: 50% by weight, softening temperature: 95°C
Polyester-series urethane resin solution B: manufactured by Dainichiseika Color & Chemicals Mfg. Co., Ltd., Rezamine ME3119LP, solvent:

dimethylformamide/methyl ethyl ketone = 35/65 (weight ratio), solid content: 34% by weight, softening temperature : 135°C

Polyester-series urethane resin solution C: manufactured by Dainichiseika Color & Chemicals Mfg. Co., Ltd., Rezamine ME3139LP, solvent:

dimethylformamide/methyl ethyl ketone =40/60 (weight ratio), solid content: 30% by weight, softening temperature : 165°C

Ethylene-acrylic acid resin emulsion (ethylenic resin emulsion D): High-Tec E8776, manufactured by TOHO Chemical Industry Co., Ltd, solid content: 25% by weight, softening temperature: 75°C.

(Masking layer)

Titanium oxide-containing carbonate-series urethane resin solution A: manufactured by Dainichiseika Color & Chemicals Mfg. Co., Ltd., Seika Seven BS012 (S) white, dispersive particle size of titanium oxide: 0.2 μm, urethane-series resin/titanium oxide = 9/1 (weight ratio), solvent: dimethylformamide, solid content: 55% by weight.
Titanium oxide-containing carbonate-series urethane resin solution B: manufactured by Dainichiseika Color & Chemicals Mfg. Co. , Ltd. , Seika Seven DNT9094 white, dispersive particle size of titanium oxide: 0.2 μm, urethane-series resin/titanium oxide = 1/9 (weight ratio), solvent: isopropanol/toluene = 50/50 (weight ratio), solid content: 55% by weight.
Polyester-series urethane resin solution C: manufactured by Dainichiseika Color & Chemicals Mfg. Co., Ltd., Rezamine ME3119LP, solvent: dimethylformamide/methyl ethyl ketone = 35/65 (weight ratio), solid content: 34% by weight, softening temperature: 135°C.

Carbonate-series urethane resin solution D: manufactured by Dainichiseika Color & Chemicals Mfg. Co. , Ltd., Rezamine NE-302HV, solvent: isopropanol/toluene = 50/50 (weight ratio), solid content: 35% by weight, softening temperature: 135°C.

Dispersion liquid of titanium oxide E: a dispersion liquid obtained by mixing a titanium oxide (manufactured by Ishihara Sangyo Co., Ltd., TIPAQUE R-930) and a polyester-series urethane resin solution C in the weight ratio of the urethane resin relative to the titanium oxide being 9/1 with stirring with a bead mill for 60 minutes, solid content: 56% by weight, dispersive particle size of the titanium oxide: 0.2 µm.

Dispersion liquid of titanium oxide F: a dispersion liquid obtained by mixing a titanium oxide (manufactured by Ishihara Sangyo Kaisha, Ltd., TIPAQUE R-930) and a polyester-series urethane resin solution C in the weight ratio of the urethane resin relative to the titanium oxide being 9/1 with stirring by an agitating blade attached to a three one motor with 500 rpm for 10 minutes, solid content: 56% by weight, dispersive particle size of the titanium oxide: 12 µm.

Urethane-modified aliphatic polyisocyanate G: manufactured by Sumitomo Bayer Urethane K.K. , Sumijule HT, a solution comprising 75% by weight of a polyisocyanate component of and 25% by weight of ethyl acetate.

(Anchor layer)

Cationic carbonate-series urethane emulsion A: manufactured by Dai-ichi Kogyo Seiyaku Co. , Ltd. , F-8559D, solid content: 26% by weight.

(Image-receiving layer)

Dye fixing agent A: manufactured by Senka, Co. Ltd., PCQ-1, a methyl sulfate of a trimethyl aminoethyl·polymethacrylic ester, an aqueous solution having 20% by weight of solid content.

Dye fixing agent B: manufactured by Senka, Co. Ltd. , PAPIOGEN P-109, benzylalkylammonium chloride, an aqueous solution having a solid content of 30% by weight.

Cationic polyurethane-series resin emulsion C: manufactured by Dainippon Ink and Chemicals, Inc. , PATELACOL CD-004, solid content: 30% by weight.

Polyurethane-series resin emulsion D: manufactured by SHIN-NAKAMURA CEMICAL CO, LTD., SP RESIN ME-307.

Polyamide 12 particle E: manufactured by Daicel-Degussa Ltd., VESTAMELT 430-P06, oil absorption: 45 ml/100g, melting point: 110°C, average particle size: 60 µm.

Polyamide 6/12 particle F: manufactured by Atofina Japan Co., Ltd., Orgasol 3501EX D NAT-1, oil absorption: 212 ml/100g, melting point: 142°C, average particle size: 10 µm.

Polyamide 12 particle G: manufactured by Daicel-Degussa Ltd., VESTAMELT 640-P1, melting point: 76°C, average particle size: 100 µm.

Polyurethane resin particle H: manufactured by Dainippon Ink and Chemicals, Inc., BURNOCK CFB-100, glass transition temperature: -12°C, softening point: 135°C, average particle size: 20 µm.

Silica particle I: manufactured by TOKUYAMA Corp., Fine Seal X-45, average particle size: 5 µm.

Polyurethane-series resin emulsion J: manufactured by Zeneca Resins, NEOREZR 960.

(Release layer)

Silicone-modified acrylic resin A: manufactured by SHOWA DENKO K.K., Sun Flure LS230

Polyisocyanate-series crosslinking agent B: manufactured by Sumitomo Bayer Urethane K.K., SumijuleN3300

Silica particle C: manufactured by MIZUSAWA INDUSTRIAL CHEMICALS, LTD., MIZUKASIL P78A, average particle size: 3 µm.

[Record sheet]

(Record sheet 1)

With a color copying machine (manufactured by Canon, Inc., trade name "PIXEL G CLC-1110"), a record image was formed on a transfer paper (manufactured by HAYASHI KAGAKU Co. , LTD, trade name "SH-80" , a size of A4, a release-treated paper) with a toner. The obtained sheet is named as a record sheet 1.

(Record sheet 2)

A thermal-sublimative ink (manufactured by YUKI CO. LTD, trade name "SHOSEN-KOBO INK") for an ink jet printer was provided with an ink jet printer (manufactured by Seiko Epson Corporation, trade name "MJ2200C"), and a record image was formed on a paper for an ink jet printer (manufactured by Seiko Epson Corporation, trade name "PM Photo Paper", a size of A4). The obtained sheet is named as a record sheet 2.

[Printing property 1]

By means of an ink jet printer (manufactured by Seiko Epson Corporation, PM-900C) using an aqueous dye ink, a predetermined image was printed on the image-receiving layer with cyan (C), magenta (M), yellow (Y) and black (K) inks to form a record image. In a transfer sheet in which the record image was formed, the bleeding (blur) of the ink was visually observed and evaluated on the basis of the following criteria.
A: No bleeding occurred
B: Minute bleeding occurred.
C: Bleeding occurred.

[Printing property 2]

With the use of an ink jet printer (manufactured by Roland DG Corporation, SP-300) using a soft solvent pigment ink (a pigment ink having a pigment dispersed in a glycol-series organic solvent), a predetermined image was printed on the transfer layer (the image-receiving layer or the masking layer) with cyan (C), magenta (M), yellow (Y) and black (K) inks to form a record image. In a transfer sheet in which the record image was formed, the bleeding of the ink was visually observed and evaluated on the basis of the following criteria.
A: No bleeding occurred
B: Minute bleeding occurred.
C: Bleeding occurred.

[Transferability 1]

In the same manner with a method used in the printing property 1, a record image was recorded onto a transfer sheet. A release paper (or support) was released from the transfer sheet, the exposed adhesive layer was brought into contact with a T-shirt made of a mixed fabric of a black-colored polyethylene terephthalate (PET) and a cotton [black PET/cotton = 50/50 (weight ratio)]. From the side of the image-receiving layer, through a release paper in which both surfaces were treated with a silicone, the record image was thermally-transferred to the fabric with an iron at a temperature of 180°C and under a pressure of 10 g/cm$^2$ (980 Pa) for 4 minutes, and the transferability was evaluated based on the following criteria.
A: The transferred part is completely attached with the fabric.
B: Although the transferred part is attached with the fabric, some part is not bonded.
C: Almost all of the transferred part is not attached with the fabric.

[Transferability 2]

As for a transfer sheet in which a record image was formed in the same manner with the printing property 2, the transferability was evaluated alike with the transferability 1.

[Transferability 3]

In Examples 27 to 30 and Comparative Example 8, an adhesive layer which was exposed by releasing a release paper (or support) from the transfer sheet was brought into contact with a T shirt made of a mixed fabric of a black polyethylene terephthalate (PET) and a cotton [black PET/cotton = 50/50 (weight ratio)]. From the side of the transfer layer, through a release paper in which both surfaces were treated with a silicone, the transfer layer was thermally-transferred to the fabric with an iron at a temperature of 140°C and under a pressure of 10 g/cm$^2$ (980 Pa) for 4 minutes. Further, the image on the record sheet was thermally-transferring to a transfer layer by bringing the record sheet into contact with the transfer layer and heating the contact matter at a temperature of 140°C under a pressure of 10 g/cm$^2$ (980 Pa) for 4 minutes. Then the transferability of the transfer layer to the fabric was evaluated based on the following criteria.
A: The transferred layer is completely attached with the fabric.
B: Although the transferred layer is attached with the fabric, some part is not attached.
C: Almost all of the transferred layer is not attached with the fabric.

[Image formability]

In Examples 27 to 30 and Comparative Example 8, with respect to the images on the record sheets, as well as the images on the transfer sheets which were thermally-transferred from the record sheets, the concentration of the reflected colors (color optical density) in the solid images of yellow (Y), magenta (M), cyan (C), and black (K) ink parts was measured by a reflection-mode (reflection-type) Macbeth densitometer (manufactured by Sakata Inx Corp., RD-1200). After calculating the average value in each color, the ratio of the color density of the transfer sheet relative to that of the record sheet was determined and evaluated in the following criteria.
A: The color density of the transfer sheet relative to that of the record sheet is not less than 30%
B: The color density of the transfer sheet relative to that of the record sheet is less than 30%.

[Texture (Softness)]

In the evaluation method of the transferability, with respect to the T-shirt to which the record image was transferred, texture (softness) was evaluated on the basis of the following criteria.
A: The cloth is soft and the transfer layer is not recognized.
B: The cloth is roughish.
C: The cloth is stiff and the transfer layer is recognized.

[Masking property]

In the evaluation method of the transferability, with respect to the transferred part of the T-shirt to which the record image was transferred, whiteness degree (L value) in the part where record image did not exist was measured with use of a chroma meter (manufactured by Minolta Co., Ltd., CR 2000), and evaluated based on the following criteria.
A: L value is not less than 92.
B: L value is not less than 88 and less than 92.
C: L value is less than 88.

[Releasability]

In the record sheet brought into contact with the transfer sheet in Examples 27 to 30 and Comparative Example 8, releasability of the record sheet from the transfer sheet was evaluated in accordance with the following criteria.
A: The record sheet was released without damaging the transfer sheet.
B: The record sheet was released with damaging the transfer sheet, or failed to be released.

[Washing resistance 1]

In the evaluation of the transferability, regarding the T-shirt to which the record image was transferred, the washing operation was carried out with a household washing machine (manufactured by Sanyo Electric Co. , Ltd.) by adding 1 g/L of a commercially available detergent to a warmed water at 40°C, washing for 15 minutes, rinsing for 20 minutes and drying for 5 minutes. This cycle was repeated 5 times. The color density in the colored parts of each color was measured before and after washing operation by using a reflection-mode (reflection-type) Macbeth densitometer (manufactured by Sakata Inx Corp., RD-1200). The average color densities before and after washing were regarded as color densities before and after washing, respectively, and the retention (ratio) of a color density was calculated by the following formula, and the degree of discoloring with wash was evaluated on the basis of the following criteria.

$$\texttt{Retention of a color density = (a color density after}$$

$$\texttt{washing/a color density before washing) x 100 (\%)}$$

(Evaluation criteria)

A: Retention of a color density is not less than 90 %.

B: Retention of a color density is not less than 80 % and below 90%.

C: Retention of a color density is below 80 %.

[Washing resistance 2]

After washing the T-shirt with the transferred image in the similar manner with the washing method of the washing resistance 1, the transferred part was visually observed, and the washing durability was evaluated on the bases of the following criteria.
A: No crack (chap or craze) or peeling (separation) in the transferred parts.
B: A small amount of cracks (chaps or crazes) or peeling (separation) is present in the transferred parts.
C: A large amount of cracks (chaps or crazes) or peeling (separation) is present in the transferred parts.

[Elongation at break]

The transfer sheet was cut into the size of 15 mm wide and 15 cm long, and the release paper (support) was peeled off from the transfer layer. The peeled transfer layer was set in a tensile tester (manufactured by ORIENTEC Co., LTD, Tensilon RTM-100) with a distance of 10 cm between zips. By conducting a test with a tensile speed of 300 mm/minute, the elongation at break was evaluated in accordance with the following criteria.
A: Not less than 100%
B: Not less than 30% and less than 100%
C: Less than 30%

[Concentration of benzyl chloride in working environment]

The concentration of benzyl chloride was measured by a gas chromatography/mass spectrometry method (a GC/MS method) under the following conditions.

Analysis Method:

(1) Preparation of Extract Solution

The sheet (about 3 g) was immersed in 40 mL of chloroform, treated with ultrasonication at a predetermined temperature (room temperature) for one hour, and centrifuged to prepare an extract solution.
(2) GC/MS and Analytic Conditions of GC/MS Conditions of Py (thermal decomposition) part
Used instrument: Py-2010D (manufactured by Frontier Laboratories Ltd.)
Heating temperature: 180°C
Heating period: 5 minutes
Ambient gas in heating: synthetic Air ($N_2$; 80%, $O_2$; 20%)

Interfacing temperature: 280°C

Conditions of GC part

Used instrument: GC/MS QP-5050A (GC-17A)

(manufactured by Shimadzu Corporation)

Column: DB-624 (manufactured by J&W Scientific) (I.D. 0.53 mm x L 30 m; df. 3.0 $\mu$m)

Temperature: Column 80 °C (1 minute) $\rightarrow$ 10°C/minute $\rightarrow$ 160°C (0 minute) $\rightarrow$ 20°C/minute $\rightarrow$ 220°C (0 minute)

Injector: 280°C

Interface: 280°C

Head Pressure: 5 kPa

Carrier Gas: He (N60)

Conditions of MS part (SCAN)

Ionization: EI

Ionization Voltage: 70 eV

Sampling Grade: 0.25 second

Monitor Ion: Benzyl chloride m/z = 91 (126)

Gain: 1.5 kV

Under the conditions mentioned above, the amount of benzyl chloride contained in the sheet (excluding a clay-coated paper) was determined quantitatively. Furthermore, based on the results of the quantitative determination, the expected amount of benzyl chloride generated from 16 pieces of the A4-sized image-recorded sheets was calculated, and the concentration of benzyl chloride in a working space (volume: 10 m$^3$) was estimated. Incidentally, the calculation and estimation were carried out assuming the molecular weight of benzyl chloride to be 161.0, and the volume of the gas in standard state to be 22.4 L.

Examples 1 to 11 and Comparative Examples 1 to 4

A sheet having an adhesive layer was obtained by applying a coating solution for the adhesive layer shown in Table 1 on a clay-coated and silicone-coated paper (weight capacity: 90 g/m$^2$, 90 $\mu$m thick). The coating solution was prepared by adding dimethylformamide and adjusting the solid content to 35% by weight. Next on the adhesive layer, the coating solution for the masking layer shown in Table 1 was coated to form a masking layer. The coating solution for the masking layer was a coating solution obtained by adding methyl ethyl ketone [a mixed solvent of isopropanol and toluene (isopropanol/toluene = 50/50) in Examples 2, 4, 5, 7, 8 and 11] and adjusting the solid content to 30% by weight. On the masking layer, the coating solution for the anchor layer shown in Table 1 was coated to form an anchor layer. The coating solution for the anchor layer was obtained by adding water and adjusting the solid content to 20% by weight. Further, on the anchor layer, the coating solution for the image-receiving layer shown in Table 1 was coated to give a transfer sheet. The coating solution for the image-receiving layer was obtained by adding water and adjusting the solid content to 30% by weight. Incidentally, in Examples 4 to 6, and 8 the anchor layer and the image-receiving layer were not formed. In Comparative Example 1, the adhesive layer was not formed. In Comparative Example 2, the adhesive layer, the anchor layer and the image-receiving layer were not formed. In Comparative Example 3, the adhesive layer and the anchor layer were not formed. In Comparative Example 4, the masking layer was not formed. The evaluation results of the obtained transfer sheets were shown in Table 1.

[Table 1]

Table 1

| | | Examples | | | | | | | | | | | Comparative Examples | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Adhesive layer (parts by weight) | Urethane resin solution A | 65 | 65 | 65 | 65 | 65 | 65 | 65 | 65 | - | 65 | 65 | - | - | - | 65 |
| | Urethane resin solution B | 35 | 35 | 35 | 35 | 35 | 35 | 35 | 35 | - | 35 | 35 | - | - | - | 35 |
| | Ethylenic resin emulsion D | - | - | - | - | - | - | - | - | 100 | - | - | - | - | - | - |
| | Coating amount (dry) (g/m$^2$) | 35 | 35 | 35 | 35 | 35 | 35 | 35 | 35 | 35 | 35 | 35 | - | - | - | 35 |
| Masking layer (parts by weight) | Titanium oxide resin solution A | 65 | - | - | 65 | - | - | - | - | 65 | 64 | - | 65 | 65 | 100 | - |
| | Titanium oxide resin solution B | - | 65 | - | - | 65 | - | 64 | 64 | - | - | 98.5 | - | - | - | - |
| | Urethane resin solution C | 35 | - | - | 35 | - | - | - | - | 35 | - | - | 35 | 35 | - | - |
| | Urethane resin solution D | - | 35 | - | - | 35 | - | 34.5 | 34.5 | - | - | - | - | - | - | - |
| | Titanium oxide dispersion E | - | - | 100 | - | - | 100 | - | - | - | - | - | - | - | - | - |
| | Titanium oxide dispersion F | - | - | - | - | - | - | - | - | - | 100 | - | - | - | - | - |
| | Polyisocyanate G | - | - | - | - | - | - | 1.5 | 1.5 | - | - | 1.5 | - | - | - | - |
| | TiO$_2$ content (%by weight) | 58.5 | 58.5 | 60 | 58.5 | 58.5 | 60 | 57.6 | 57.6 | 58.5 | 60 | 88.7 | 58.5 | 58.5 | 90 | - |
| | Coating amount (dry) (g/m$^2$) | 40 | 40 | 40 | 40 | 40 | 40 | 40 | 40 | 40 | 40 | 40 | 40 | 40 | 40 | - |
| Anchor layer (parts by weight) | Cationic urethane emulsion A | 100 | 100 | 100 | - | - | - | 100 | - | 100 | 100 | 100 | 100 | - | - | 100 |
| | Coating amount (dry) (g/m$^2$) | 5 | 5 | 5 | - | - | - | 5 | - | 5 | 5 | 5 | 5 | - | - | 5 |

(continued)

| Image-rece iving layer (parts by weight) | | Examples | | | | | | | | | | | Comparative Examples | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Image-rece iving layer (parts by weight) | Dye fixing agent A | 4 | 4 | 4 | - | - | - | 4 | - | 4 | 4 | 4 | 4 | - | 4 | 4 |
| | Cationic urethane emulsion C | 4 | 4 | 4 | - | - | - | 4 | - | 4 | 4 | 4 | 4 | - | 4 | 4 |
| | Urethane emulsion D | 3 | 3 | 3 | - | - | - | 3 | - | 3 | 3 | 3 | 3 | - | 3 | 3 |
| | Polyamide 12 particle E | 36 | 36 | - | - | - | 36 | 36 | - | 32 | 32 | 32 | 36 | - | 36 | 36 |
| | Polyamide 6/12 particle F | 10 | 10 | 10 | - | - | - | 10 | - | 3 | 3 | 3 | 10 | - | 10 | 10 |
| | Polyamide 12 particle G | 2 | 2 | 2 | - | - | - | 2 | - | 2 | 2 | 2 | 2 | - | 2 | 2 |
| | Urethane particle H Silica particle I | 41 | 41 | 41 | - | - | - | 41 | - | 41 | 37 | 37 | 41 | - | 41 | 41 |
| | | - | - | - | - | - | - | - | - | - | 15 | 15 | - | - | - | - |
| | Coating amount (dry) (g/m$^2$) | 30 | 30 | 30 | - | - | - | 30 | - | 30 | 30 | 30 | 30 | - | 30 | 30 |
| Evaluation | Printing property 1 | A | A | A | - | - | - | A | - | - | A | A | A | - | A | A |
| | Printing property 2 | A | A | A | A | A | A | A | A | A | A | A | A | A | A | A |
| | Transferability 2 | A | A | A | A | A | A | A | A | A | A | A | C | C | C | A |
| | Texture (Softness) | A | A | A | A | A | A | B | B | A | A | B | A | A | A | A |
| | Masking property | A | A | A | A | A | A | A | A | A | A | A | A | A | A | C |
| | Washing resistance 1 | A | A | A | A | A | A | A | A | A | B | A | C | C | C | A |
| | Washing resistance 2 | A | A | A | A | A | A | A | A | A | B | A | C | C | C | A |
| | Elongation at break | A | A | A | A | A | A | A | A | A | A | A | B | B | C | A |

**EP 1 710 077 A1**

As shown in the results of Table 1, the transfer sheets of Examples 1 to 11 are excellent in the balance among various properties. On the contrary, the transfer sheets of Comparative Examples 1 to 3 deteriorate in the transferability, the washing resistance and the elongation at break, and the transfer sheet of Comparative Example 4 was low in the masking property.

Examples 12 to 13 and Comparative Examples 5 to 6

A sheet having an adhesive layer was obtained by coating a coating solution for the adhesive layer shown in Table 2 on a clay-coated and silicone-coated paper (weight capacity: 90 g/m$^2$, 90 $\mu$m thick). The coating solution was prepared by adding dimethylformamide and adjusting the solid content to 35% by weight. Next on the adhesive layer, the coating solution for the masking layer shown in Table 2 was coated to form a masking layer. The coating solution for the masking layer was a coating solution obtained by adding methyl ethyl ketone and adjusting the solid content to 30% by weight. On the masking layer, the coating solution for the anchor layer shown in Table 2 was coated to form an anchor layer. The coating solution for the anchor layer was obtained by adding water and adjusting the solid content to 20% by weight. Further, on the anchor layer, the coating solution for the image-receiving layer shown in Table 2 was coated to give a transfer sheet. The coating solution for the image-receiving layer was obtained by adding water adjusting the solid content to 30% by weight. Incidentally, in Comparative Example 5 the masking layer and the anchor layer were not formed. In Comparative Example 6, the adhesive layer and the masking layer were not formed. The evaluation results of the obtained transfer sheets were shown in Table 2.

[Table 2]

Table 2

| | | Ex. | | Com.Ex. | |
|---|---|---|---|---|---|
| | | 12 | 13 | 5 | 6 |
| Adhesive layer (parts by weight) | Urethane resin solution A | 80 | 80 | 80 | - |
| | Urethane resin solution B | 20 | 20 | 20 | - |
| | Coating amount (dry) (g/m$^2$) | 35 | 35 | 35 | - |
| Masking layer (parts by weight) | Titanium oxide resin solution A | 65 | 65 | - | - |
| | Urethane resin solution C | 35 | 35 | - | - |
| | TiO$_2$ content (% by weight) | 58.5 | 58.5 | - | - |
| | Coating amount (dry) (g/m$^2$) | 40 | 40 | - | - |
| Anchor layer (parts by weight) | Cationic urethane emulsion A | 100 | 100 | - | 100 |
| | Coating amount (dry) (g/m$^2$) | 5 | 5 | - | 5 |
| Image-receiving layer (parts by weight) | Dye fixing agent A | - | - | 4 | - |
| | Dye fixing agent B | 5 | 4 | - | 8 |
| | Cationic urethane emulsion C | - | 4 | 4 | 8 |
| | Urethane emulsion D | 3 | 3 | 3 | 4 |
| | polyamide 12 particle E | 36 | 32 | 55 | - |
| | polyamide 6/12 particle F | 13 | 3 | 30 | - |
| | Polyamide 12 particle G | 2 | 2 | 4 | - |
| | Urethane particle H | 41 | 37 | - | 80 |
| | SilicaparticleI | - | 15 | - | - |
| | Coating amount (dry) (g/m$^2$) | 30 | 30 | 30 | 30 |

(continued)

| | | Ex. | | Com.Ex. | |
|---|---|---|---|---|---|
| | | 12 | 13 | 5 | 6 |
| Evaluation | Printing property 1 | A | A | A | C |
| | Transferability 1 | A | A | A | C |
| | Texture (softness) | A | A | A | A |
| | Masking property | A | A | - | - |
| | Washing resistance 1 | A | A | B | C |
| | Washing resistance 2 | A | A | C | C |

As shown in the results of Table 2, the transfer sheets of Examples 12 to 13 are excellent in the balance of various properties. On the contrary, the transfer sheet of Comparative Example 5 was low in the washing resistance. The transfer sheets of Comparative Example 6 deteriorate in the printing ability, the transferability, and the washing resistance.

Examples 14 to 26 and Comparative Example 7

A sheet having an adhesive layer was obtained by coating a coating solution for the adhesive layer shown in Table 3 on a clay-coated and silicone-coated paper (weight capacity: 90 g/m$^2$, 90 $\mu$m thick). The coating solution was prepared by adding dimethylformamide and adjusting the solid content to 35% by weight. Next, on the adhesive layer, the coating solution for the masking layer shown in Table 2 was coated to form a masking layer. The coating solution for the masking layer was a coating solution obtained by adding methyl ethyl ketone and adjusting the solid content to 30% by weight. On the masking layer, the coating solution for the anchor layer shown in Table 3 was coated to form an anchor layer. The coating solution for the anchor layer was obtained by adding water and adjusting the solid content to 20% by weight. Further, on the anchor layer, the coating solution for the image-receiving layer shown in Table 3 was coated to give a transfer sheet. The coating solution for the image-receiving layer was obtained by adding water and adjusting the solid content to 30% by weight. Incidentally, in Examples 16 and 19 the anchor layer was not formed. In Comparative Example 7, the masking layer and the anchor layer were not formed. The evaluation results of the obtained transfer sheets were shown in Table 3.
[Table 3]

Table 3

| | | Examples | | | | | | | | | | | | | Com. Ex. |
| | | 14 | 15 | 16 | 17 | 18 | 19 | 20 | 21 | 22 | 23 | 24 | 25 | 26 | 7 |
|---|---|---|---|---|---|---|---|---|---|---|---|---|---|---|---|
| Adhesive layer (parts by weight) | Urethane resin solution A | 80 | 65 | 65 | 80 | 80 | 80 | 80 | 80 | 80 | 80 | - | 80 | 80 | 80 |
| | Urethane resin solution B | 20 | 35 | 35 | 20 | 20 | 20 | 20 | - | 20 | 20 | - | 20 | 20 | 20 |
| | Urethane resin solution C | - | - | - | - | - | - | - | 20 | - | - | - | - | - | - |
| | Ethylenic resin emulsion D | - | - | - | - | - | - | - | - | - | - | 100 | - | - | - |
| | Coating amount (dry) (g/m$^2$) | 35 | 35 | 35 | 35 | 35 | 35 | 35 | 35 | 35 | 35 | 35 | 35 | 35 | 35 |
| Masking layer (parts by weight) | Titanium oxide resin solution A | 65 | 65 | 65 | 65 | 55 | 64 | 64 | 65 | 65 | 64 | 65 | - | 65 | - |
| | Urethane resin solution C | 35 | 35 | 35 | 35 | 45 | 34.5 | 34.5 | 35 | 35 | 34.5 | 35 | - | 35 | - |
| | Titanium oxide dispersion F | - | - | - | - | - | - | - | - | - | - | - | 100 | - | - |
| | Polyisocyanate G | - | - | - | - | - | 1.5 | 1.5 | - | - | 1.5 | - | - | | |
| | TiO$_2$ content (%by weight) | 58.5 | 58.5 | 58.5 | 58.5 | 49.5 | 57.6 | 57.6 | 58.5 | 58.5 | 57.6 | 58.5 | 60 | 58.5 | - |
| | Coating amount (dry) (g/m$^2$) | 40 | 40 | 40 | 40 | 45 | 40 | 40 | 40 | 40 | 40 | 40 | 40 | 40 | - |
| Anchor layer (parts by weight) | Cationic urethane emulsion A | 100 | 100 | - | 100 | 100 | - | 100 | 100 | 100 | 100 | 100 | 100 | 100 | - |
| | Coating amount (dry) (g/m$^2$) | 5 | 5 | - | 15 | 5 | - | 5 | 5 | 5 | 5 | 5 | 5 | 5 | - |

EP 1 710 077 A1

| | | Examples | | | | | | | | | | | | Com. Ex. |
|---|---|---|---|---|---|---|---|---|---|---|---|---|---|---|
| | | 14 | 15 | 16 | 17 | 18 | 19 | 20 | 21 | 22 | 23 | 24 | 25 | 26 | 7 |
| Image-receiving layer (parts by weight) | Dye fixing agent A | 4 | 4 | 4 | 4 | 4 | 4 | 4 | 4 | 4 | 4 | 4 | 4 | - | 4 |
| | Dye fixing agent B | - | - | - | - | - | - | - | - | - | - | - | - | 4 | - |
| | Cationic urethane emulsion C | 4 | 4 | 4 | 4 | 4 | 4 | 4 | 4 | 4 | 4 | 4 | 4 | 4 | 4 |
| | Urethane emulsion D | 3 | 3 | 3 | 3 | 3 | 3 | 3 | 3 | 3 | 3 | 3 | 3 | 3 | 3 |
| | Polyamide 12 particle E | 36 | 36 | 36 | 36 | 36 | 36 | 36 | 36 | 32 | 32 | 36 | 36 | 36 | 36 |
| | Polyamide 6/12 particle F | 10 | 10 | 10 | 10 | 10 | 10 | 10 | 10 | 3 | 3 | 10 | 10 | 10 | 10 |
| | Polyamide 12 particle G | 2 | 2 | 2 | 2 | 2 | 2 | 2 | 2 | 2 | 2 | 2 | 2 | 2 | 2 |
| | Urethane particle H | 41 | 41 | 41 | 41 | 41 | 41 | 41 | 41 | 37 | 37 | 41 | 41 | 41 | 41 |
| | Silica particle I | - | - | - | - | - | - | - | - | 15 | 15 | - | - | - | - |
| | Coating amount (dry) (g/m$^2$) | 30 | 30 | 30 | 30 | 30 | 30 | 30 | 30 | 30 | 30 | 30 | 30 | 30 | 30 |
| Evaluation | Transferability 1 Texture (Softness) | A | A | A | A | A | A | A | A | A | A | A | A | A | A |
| | | A | A | A | B | A | A | A | A | A | A | A | A | A | A |
| | Masking property Washing resistance 1 Washing resistance 2 | A | A | A | A | B | A | A | A | A | A | A | A | A | C |
| | | A | A | B | A | A | A | A | A | A | A | A | B | A | A |
| | | A | A | B | A | A | A | A | A | A | A | A | B | A | A |
| | Concentration in working environment (ppm) | 0.4 | 0.4 | 0.4 | 0.4 | 0.4 | 0.4 | 0.4 | 0.4 | 0.4 | 0.4 | 0.4 | 0.4 | 9.8 | 0.4 |

EP 1 710 077 A1

As apparent from the results of Table 3, the transfer sheets of Examples 14 to 26 are excellent in the balance of various properties. On the contrary, the transfer sheet of Comparative Example 7 was low in the masking property.

Examples 27 to 30 and Comparative Example 8

A sheet having an adhesive layer was obtained by coating a coating solution for the adhesive layer shown in Table 4 on a clay-coated and silicone-coated paper (weight capacity: 90 g/m$^2$, 90 $\mu$m thick). The coating solution was prepared by adding dimethylformamide and adjusting the solid content to 35% by weight. Next on the adhesive layer, the coating solution for the masking layer shown in Table 4 was coated to form a masking layer. The coating solution for the masking layer was a coating solution obtained by adding a mixed solvent of isopropanol and toluene [isopropanol/ toluene = 50/50 (weight ratio)](methyl ethyl ketone in Comparative Example 8) and adjusting the solid content to 30% by weight. Next, on the masking layer, the coating solution for the image-receiving layer shown in Table 4 was coated to form an image-receiving layer in the dry thickness of 5 $\mu$m. Further, on the image-receiving layer, the coating solution for the releasing layer shown in Table 4 was coated to form a releasing layer in the dry thickness of 5 $\mu$m to obtain the transfer sheet. Incidentally, in Examples 27 and 28, the image-receiving layer and the releasing layer were not formed. In Examples 29, the image-receiving layer was not formed. In Comparative Example 8, the image-receiving layer and the releasing layer were not formed. In the Examples 29 the image-receiving layer was not formed. In Comparative Example 8 the adhesive layer, the image-receiving layer, and the releasing layer were not formed. The evaluation results of the obtained transfer sheets were shown in Table 4.

[Table 4]

Table 4

| | | Ex. | | | | Com.Ex. |
|---|---|---|---|---|---|---|
| | | 27 | 28 | 29 | 30 | 8 |
| Adhesive layer (parts by weight) | Urethane resin solution A | 65 | 65 | 65 | 65 | - |
| | Urethane resin solution B | 35 | 35 | 35 | 30 | - |
| | Coating amount (dry) (g/m$^2$) | 35 | 35 | 35 | 35 | - |
| Masking layer (parts by weight) | Titanium oxide resin solution A | - | - | - | - | 65 |
| | Titanium oxide resin solution B | 65 | 65 | 65 | 65 | - |
| | Urethane resin solution C | - | - | - | - | 35 |
| | Urethane resin solution D | 35 | 35 | 35 | 35 | - |
| | TiO$_2$ content (% by weight) | 58.5 | 58.5 | 58.5 | 58.5 | 58.5 |
| | Coating amount (dry) (g/m$^2$) | 40 | 40 | 40 | 40 | 40 |
| Image-receiving layer (parts by weight) | Urethane emulsion J | - | - | - | 100 | - |
| | Dry thickness ($\mu$m) | - | - | - | 5 | - |
| Release layer (parts by weight) | Silicone-modified acrylic resin A | - | - | 20 | 20 | - |
| | Polyisocyanate crosslinking agent B | - | - | 3 | 3 | - |
| | Silica particle C | - | - | 15 | 15 | - |
| | Ethyl acetate | - | - | 25 | 25 | - |
| | Dry thickness ($\mu$m) | - | - | 5 | 5 | - |
| Record sheet species | | 1 | 2 | 2 | 2 | 1 |

(continued)

| | | Ex. | | | | Com.Ex. |
|---|---|---|---|---|---|---|
| | | 27 | 28 | 29 | 30 | 8 |
| Evaluation | Transferability 3 | A | A | A | A | C |
| | Image formability | A | A | A | A | A |
| | Texture (Softness) | A | A | A | A | - |
| | Masking property | A | A | A | A | A |
| | Releasability | A | A | A | A | A |
| | Washing resistance 1 | A | A | A | A | - |
| | Washing resistance 2 | A | A | A | A | - |
| | Break elongation | A | A | A | A | C |

As apparent from the results of Table 4, the transfer sheets of Examples 27 to 30 are excellent in the balance of various properties. On the contrary, since the transfer sheet of Comparative Example 8 did not have the adhesive layer, the transfer sheet cannot be transferred to the T-shirt.

**Claims**

1. A transfer sheet which comprises a support and a transfer layer releasable from the support, wherein
   the transfer layer comprises (i) an adhesive layer formed on one surface of the support and (ii) a masking layer formed on the adhesive layer and containing a masking agent and a binder resin which may have a crosslinking group; and
   the elongation at break of the transfer layer is not less than 30%.

2. A transfer sheet according to claim 1, wherein the masking layer comprises a white pigment and a urethane-series resin which may have an isocyanate group.

3. A transfer sheet according to claim 2, wherein the white pigment comprises a titanium oxide having an average particle size of not larger than 3 $\mu$m.

4. A transfer sheet according to claim 1, wherein the proportion (weight ratio) of the masking agent relative to the binder resin is 30/70 to 90/10, and the transfer sheet has a whiteness degree (L value) of not less than 88 when measured from the masking layer side.

5. A transfer sheet according to claim 1, wherein the adhesive layer comprises at least one hot-melt adhesive resin selected from the group consisting of a urethane-series resin, a polyamide-series resin, and an olefinic resin.

6. A transfer sheet according to claim 1, wherein the adhesive layer comprises at least one hot-melt adhesive resin selected from the group consisting of a urethane-series resin having a softening point of 70 to 180°C and an olefinic resin having a melting point of 70 to 120°C.

7. A transfer sheet according to claim 1, wherein each layer of the adhesive layer and the masking layer contains at least a urethane-series resin.

8. A transfer sheet according to claim 1, wherein the adhesive layer comprises a urethane-series resin having a softening point of 70 to 120°C and a urethane-series resin having a melting point over 120°C and not higher than 180°C,
   the masking layer comprises a titanium oxide having an average particle size of 0.05 to not larger than 2 $\mu$m and a urethane-series resin,
   the proportion (weight ratio) of the titanium oxide relative to the urethane-series resin in the masking layer is 35/65 to 80/20, and
   the elongation at break of the transfer layer is 30 to 200%.

**9.** A transfer sheet according to claim 1, wherein the transfer layer further comprises an image-receiving layer formed on the masking layer.

**10.** A transfer sheet according to claim 9, wherein the image-receiving layer comprises at least one soft resin selected from the group consisting of a vinyl chloride-series resin, a polyester-series resin, and a urethane-series resin.

**11.** A transfer sheet according to claim 9, wherein the image-receiving layer at least comprises a urethane-series resin particle.

**12.** A transfer sheet according to claim 11, wherein the urethane-series resin particle comprises at least one member selected from the group consisting of a urethane resin particle and a polyurethane-urea resin particle.

**13.** A transfer sheet according to claim 11, wherein the image-receiving layer further contains a hot-melt adhesive particle.

**14.** A transfer sheet according to claim 13, wherein the hot-melt adhesive particle comprises a polyamide-series resin particle.

**15.** A transfer sheet according to claim 13, wherein the image-receiving layer is formed at a predetermined heating temperature, the urethane-series resin particle has a softening point over the heating temperature, and the hot-melt adhesive particle has a softening point of not higher than the heating temperature.

**16.** A transfer sheet according to claim 9, wherein the image-receiving layer at least comprises a porous resin particle.

**17.** A transfer sheet according to claim 13, wherein
the image-receiving layer further comprises a binder resin and a dye fixing agent;
the proportions of the urethane-series resin particle, the hot-melt adhesive particle, and the dye fixing agent are 10 to 10000 parts by weight, 10 to 10000 parts by weight, and 1 to 200 parts by weight, respectively, relative to 100 parts by weight of the binder resin; and
the transfer layer is capable of forming an image with an ink jet recording system.

**18.** A transfer sheet according to claim 17, wherein the dye fixing agent comprises an aliphatic dye fixing agent.

**19.** A transfer sheet according to claim 9, wherein each of the adhesive layer, the masking layer, and the image-receiving layer comprises at least the same series resin.

**20.** A transfer sheet according to claim 9, wherein the transfer layer comprises an anchor layer between the masking layer and the image-receiving layer.

**21.** A transfer sheet according to claim 20, wherein the anchor layer comprises a cationic resin.

**22.** A transfer sheet according to claim 20, wherein
the adhesive layer comprises a urethane-series resin;
the masking layer comprises a titanium oxide and a urethane-series resin which may have an isocyanate group;
the image-receiving layer comprises a porous resin particle, a urethane-series resin, and an aliphatic dye fixing agent; and
the anchor layer comprises a cationic urethane-series resin.

**23.** A transfer sheet according to claim 1, wherein the transfer layer is capable of recording an image thereon, the image being transferred from a recording sheet.

**24.** A transfer sheet according to claim 23, wherein the surface of the transfer layer has releasability to the record sheet.

**25.** A transfer sheet according to claim 23, wherein the record sheet has a sublimative or thermofusibly-transferred image recorded thereon in advance.

**26.** A transfer sheet according to claim 1, which is usable for forming an image on a colored object by transferring.

**27.** A process for producing a transfer sheet recited in claim 1, which comprises

forming an adhesive layer separable from a support on one surface of the support, and
forming a masking layer on the adhesive layer.

28. A method for forming an image on an object with the use of a transfer sheet recited in claim 1 comprising a support and a transfer layer, which comprises a step for releasing the support from the transfer sheet, and a step for transferring the transfer layer to the object with bringing an adhesive layer of the transfer layer into contact with the object to form an image onto the object, wherein the image is recorded on the transfer layer.

## INTERNATIONAL SEARCH REPORT

| | |
|---|---|
| International application No. |
| PCT/JP2005/000278 |

**A. CLASSIFICATION OF SUBJECT MATTER**
Int.Cl$^7$  B32B27/00, B41M5/00, D06Q1/12, G09F3/02

According to International Patent Classification (IPC) or to both national classification and IPC

**B. FIELDS SEARCHED**

Minimum documentation searched (classification system followed by classification symbols)
Int.Cl$^7$  B32B27/00, B41M5/00, D06Q1/12, G09F3/02

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-325087 A  (Kaoru YAMAMOTO), 08 December, 1998 (08.12.98), | 1-12,16, 19-28 |
| Y | (Family: none) | 13-15,17,18 |
| X | JP 2003-191694 A  (Fujicopian Co., Ltd.), 09 July, 2003 (09.07.03), | 1-12,16, 19-28 |
| Y | (Family: none) | 13-15,17,18 |
| Y | JP 2003-3121295 A  (Daicel Chemical Industries, Ltd.), 06 November, 2003 (06.11.03), (Family: none) | 13-15,17,18 |
| A | JP 1-234238 A  (Kabushiki Kaisha Tokyo Horaisha), 19 September, 1989 (19.09.89), (Family: none) | 1-28 |

☒  Further documents are listed in the continuation of Box C.          ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 June, 2005 (06.06.05) | 21 June, 2005 (21.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/000278

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-207101 A  (Canon Inc.),<br>07 August, 1998 (07.08.98),<br>(Family: none) | 1-28 |
| A | JP 63-30398 U  (Joji TSUJIMOTO),<br>27 February, 1988 (27.02.88),<br>(Family: none) | 1-28 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001232936 A
- JP 2002248875 A